# EUROPEAN PATENT SPECIFICATION

(11) **EP 4 338 020 B1**
(45) Date of publication and mention of the grant of the patent: **07.05.2025**
(21) Application number: 22734394.4
(22) Date of filing: 16.05.2022
(51) Int. Cl.: G05B 19/418, E01C 19/10

(54) **AUTOMATION OF ASPHALT PLANT OPERATIONS**
AUTOMATISIERUNG VON ASPHALTANLAGENBETRIEB
AUTOMATISATION D'OPÉRATIONS D'UNE USINE D'ASPHALTE

(30) Priority: 14.05.2021 US 202163188771 P
(43) Date of publication of application: 20.03.2024
(73) Proprietor: CRH Americas Materials, Inc., Atlanta, GA 30338 (US); Conover, Jeffrey, Atlanta, Georgia 30338 (US)
(72) Inventor: CONOVER, Jeffrey, Atlanta, Georgia 30338 (US)
(74) Representative: Greenwoods
(86) International application number: PCT/US2022/029368
(87) International publication number: WO 2022/241304

(56) References cited:
- US-A- 5 556 197
- US-B1- 9 963 837

## Description

### CROSS REFERENCES TO RELATED APPLICATIONS

This application claims the benefit of U.S. Provisional Application No. 63/188,771 filed May 14, 2022.

### TECHNICAL FIELD

This application relates generally to control systems for equipment used in asphalt manufacturing plants.

### BACKGROUND

Asphalt manufacturing plants make asphalt by mixing and heating aggregates with a binder substance. Manufacturing plants can be automatically controlled, for instance by using electronic control systems that obtain measurements from sensors, process the measurements, and make any appropriate adjustments to the manufacturing. Asphalt plants that provide alarms and/or shut down the plant when the production process is not optimal include US9963837-B1 and US5556197-A.

### SUMMARY

According to the invention, a system for controlling one or more machines in an asphalt plant includes a motor configured to receive parameters and a processor configured to perform operations corresponding to a remote mode, an alarm mode, and a local mode, and configured to receive one or more of a remote signal, an alarm signal, or a local signal. The processor is configured to perform operations including responsive to receiving the remote signal, transitioning to the remote mode. The processor is configured to perform operations including, when in the remote mode, receiving a first set of motor parameters from a data connection over a first protocol, transmitting the first set of motor parameters to the motor, and upon receiving the alarm signal, transitioning to the alarm mode. The processor is configured to perform operations including when in the alarm mode: responsive to detecting the alarm signal for a first threshold amount of time, causing an alarm to sound, and responsive to detecting the alarm signal for a second threshold amount of time that is greater than the first threshold amount of time followed by detecting the local signal, transitioning to the local mode. The processor is configured to perform operations including when in the local mode: receiving a second set of motor parameters from a local control interface via a second protocol that is different from the first protocol, and transmitting the second set of motor parameters to the motor.

In an example, the system further includes a bag house and an alarm. The bag house includes one or more fans configured to receive a fan enable signal that causes the fans to operate, and an auger configured remove fines from the bag house and to output an auger status signal indicating whether the auger is operational. The alarm is configured to receive an alarm input signal that causes the alarm to sound. The processor is further configured to perform additional operations including responsive to receiving an auger status signal indicating that an auger of the bag house is off, starting a first timer. The processor is further configured to perform additional operations including upon an expiration of the first timer, causing an auger alarm to sound by providing the alarm input signal to the alarm. The processor is further configured to perform additional operations including responsive to receiving a snooze signal, causing the auger alarm to be disabled by removing the alarm input signal from the alarm and starting a second timer. The processor is further configured to perform additional operations including upon an expiration of the second timer, removing a fan enable signal to disable one or more fans of the bag house.

In an example, the system further includes a baghouse. The baghouse includes a first air bag rotor configured to receive a first input signal, a second air bag rotor configured to receive a second input signal and to output an operational status signal, and a third air bag rotor configured to receive a third input signal. The one or more fans include a first fan, a second fan, and a third fan. The processor is further configured to perform additional operations including causing the first air bag rotor, the second air bag rotor, and the third air bag rotor to each rotate for a predetermined amount of time in a sequence by controlling the first input signal, the second input signal, and the third input signal. The processor is further configured to perform additional operations including responsive to receiving an operational bypass signal from a control device, adjusting the sequence to an adjusted sequence that includes the first air bag rotor followed by the third air bag rotor. The processor is further configured to perform additional operations including causing the first air bag rotor and the third air bag rotor to each rotate for the predetermined amount of time according to the adjusted sequence by pulsing the first input signal followed by the third input signal.

In an example, the system further includes a baghouse. The bag house includes an air intake configured to receive fresh air and an air output configured to output air. The air intake includes a first air pressure sensor configured to output a first air pressure measurement. The air output includes a second air pressure sensor configured to output a second air pressure measurement. The bag house further includes a third air pressure sensor located in proximity to a heating element and configured to output a third air pressure measurement. One or more of the first fan, the second fan, or the third fan create a differential pressure between the air intake and the air output. The processor is further configured to perform additional operations including obtaining, from the first air pressure sensor, the first air pressure measurement. The processor is further configured to perform additional operations including obtaining, from the second air pressure sensor, the second air pressure measurement. The processor is further configured to perform additional operations including calculating the differential pressure by subtracting the second air pressure measurement from the first air pressure measurement. The processor is further configured to perform additional operations including determining whether the first air pressure measurement is outside a first tolerance. The processor is further configured to perform additional operations including determining whether the second air pressure measurement is outside a second tolerance. The processor is further configured to perform additional operations including responsive to the determining, sending an alert to a control center.

In an example, the system further includes a mixer configured to receive aggregate from a feeder and to mix the aggregate with binder into an aggregate mixture. The feeder is configured to provide the aggregate at a specified flow rate. The flow rate is adjustable. The system includes a heating element configured to receive a heating control signal and to output heat to the mixer at a heat intensity level. The heat intensity level is proportional to the heating control signal. The system includes sensors. Each sensor is configured to obtain a measurement from one or more of aggregate weight, moisture, or aggregate feed rate. The processor is further configured to perform additional operations including receiving, from the sensors, sensor outputs indicating measured parameters. The processor is further configured to perform additional operations including applying to the sensor outputs, predetermined moisture measurements, and the heating control signal, one or more rules. Each moisture measurement corresponds to an ingredient of the mixture. The processor is further configured to perform additional operations including determining, from the applied rules, a desired heating intensity. The processor is further configured to perform additional operations including providing a heating control signal to the heating element. The heating control signal corresponds to the desired heating intensity.

In an example, the system includes a machine configured to receive a control signal that controls an operation of the machine and to output a machine status signal indicating an operational status of the machine and a remote control unit. The remote control unit includes an additional alarm configured to receive an alarm input signal that causes the additional alarm to sound, and a snooze button configured to output a snooze signal when depressed. The processor is further configured to perform additional operations including receiving, from the machine, the machine status signal. The processor is further configured to perform additional operations including responsive to receiving the machine status signal, providing the control signal to the machine, thereby causing the machine to stop, providing the alarm input signal to the remote control unit, thereby causing the additional alarm to sound, starting a current timer, incrementing an alarm count, and starting a cumulative timer. The processor is further configured to perform additional operations including receiving, from the machine, an updated machine status signal. The processor is further configured to perform additional operations including responsive to receiving the updated machine status signal, stopping the current timer, stopping the cumulative timer, providing an updated additional alarm signal to the remote control unit, thereby causing the additional alarm to stop, and providing an updated control signal to the machine, thereby causing the machine to operate.

According to the invention, a method is provided according to claim 14. The method includes responsive to receiving the remote signal, transitioning to the remote mode. , The method further includes, when in the remote mode, receiving a first set of motor parameters from a data connection over a first protocol, transmitting the first set of motor parameters to the motor, and upon receiving the alarm signal, transitioning to the alarm mode. The method further includes when in the alarm mode: responsive to detecting the alarm signal for a first threshold amount of time, causing an alarm to sound, and responsive to detecting the alarm signal for a second threshold amount of time that is greater than the first threshold amount of time followed by detecting the local signal, transitioning to the local mode. The method further includes when in the local mode: receiving a second set of motor parameters from a local control interface via a second protocol that is different from the first protocol, and transmitting the second set of motor parameters to the motor.

According to the invention, a non-transitory computer-readable storage medium storing computer-executable program instructions is provided according to claim 15. When executed by a processing device, the computer-executable program instructions cause the processing device to perform operations. The operations include, responsive to receiving the remote signal, transitioning to the remote mode. The operations include, when in the remote mode, receiving a first set of motor parameters from a data connection over a first protocol, transmitting the first set of motor parameters to the motor, and upon receiving the alarm signal, transitioning to the alarm mode. The operations include when in the alarm mode: responsive to detecting the alarm signal for a first threshold amount of time, causing an alarm to sound, and responsive to detecting the alarm signal for a second threshold amount of time that is greater than the first threshold amount of time followed by detecting the local signal, transitioning to the local mode. The operations include when in the local mode: receiving a second set of motor parameters from a local control interface via a second protocol that is different from the first protocol, and transmitting the second set of motor parameters to the motor.

In an example, a system for controlling an electrical motor includes: a three-way switch configured to output: a first signal when in a remote position; a second signal when in a local position; and a third signal when in an alarm position; a button configured to output a signal when depressed; a processor connected to the three-way switch and the button and configured to operate in one or more of a remote mode, an alarm mode, and a local mode, the processor being configured to perform operations including responsive to receiving the first signal, transitioning to the remote mode; when in the remote mode: receive a first set of motor parameters from a data connection over a first protocol; transmit the first set of motor parameters to a motor; and upon receiving the third signal, transitioning to the alarm mode; when in the alarm mode: responsive to detecting the third signal for a first threshold amount of time, causing an alarm to sound; and responsive to detecting the third signal for a second threshold amount of time that is greater than the first threshold amount of time followed by detecting the second signal, transitioning to the local mode; and when in the local mode: receive a second set of motor parameters from a local control interface via a second protocol that is different from the first protocol; and transmit the second set of motor parameters to the motor.

In an example, the processor is further configured, when in the alarm mode, in response to detecting the third signal for less than the second threshold amount of time, to transition back to the remote mode.

In an example, the processor is further configured, when in local mode, to send a message to a control center indicating the local mode is active.

In an example, the first set of motor parameters are Variable Frequency Drive (VFD) parameters.

In an example, when in local mode, the processor is further configured to transmit, to the motor, a startup signal that when received, causes the motor to start operation using the second set of motor parameters.

In an example, the startup signal is caused by depressing a startup button.

In an example, an asphalt bag house system includes a bag house including one or more fans configured to receive a fan enable signal that causes the fans to operate; and an auger configured remove fines from the bag house and to output a status signal indicating whether the auger is operational; an alarm configured to receive an alarm input signal that causes the alarm to sound; and a processor configured to: receive the status signal indicating that an auger is off; responsive to receiving the status signal, start a first timer; upon an expiration of the first timer, cause the alarm to sound by providing the alarm input signal to the alarm; receive a snooze signal from a control station; responsive to receiving the snooze signal, causing the alarm to be disabled by removing the alarm input signal from the alarm and starting a second timer; and upon an expiration of the second timer, removing the fan enable signal to disable the fans.

In an example, the processor is further configured to perform operations including before expiration of the second timer, receiving the status signal indicating that the auger is enabled; and responsive to receiving the status signal, maintaining the fan enable signal when the second timer expires.

In an example, the processor is further configured to perform operations including responsive to receiving an acknowledgement signal, sending an input signal to enable the auger.

In an example, one or more of a first timer duration or a second timer duration are configurable via the control station.

In an example, a system includes a first air bag rotor configured to receive a first input signal; a second air bag rotor configured to receive a second input signal and to output an operational status signal; a third air bag rotor configured to receive a third input signal; and a processor configured to: cause the first air bag rotor, the second air bag rotor, and the third air bag rotor to each rotate for a predetermined amount of time in a sequence including the first air bag rotor, followed by the second air bag rotor, followed by the third air bag rotor by pulsing the first input signal, followed by the second input signal, followed by the third input signal; receive, from a control device, an operational bypass signal for the second air bag rotor; responsive to receiving the operational bypass signal, adjusting the sequence to include the first air bag rotor followed by the third air bag rotor; and cause the first air bag rotor and the third air bag rotor to each rotate for the predetermined amount of time according to the adjusted sequence by pulsing the first input signal followed by the third input signal.

In an example, the processor is further configured to receive, from the control device, an additional operational bypass signal for the first air bag rotor; ignore the additional operational bypass signal based on the operational bypass signal; and cause the first air bag rotor and the third air bag rotor to each rotate for the predetermined amount of time according to the adjusted sequence by pulsing the first input signal followed by the third input signal.

In an example, an air intake is configured to receive fresh air, the air intake includes an air output configured to output air, the air output including a third air pressure sensor located in proximity to a heating element and configured to output a third air pressure measurement, one or more of the first air bag rotor, second air bag rotor, and third air bag rotor creating a differential pressure between the air intake and the air output; and a processor configured to perform operations including obtaining, from the first air pressure sensor, the first air pressure measurement. The processor is configured to perform operations including obtaining, from the second air pressure sensor, the second air pressure measurement. The processor is configured to perform operations including calculating the differential pressure by subtracting the second air pressure measurement from the first air pressure measurement. The processor is configured to perform operations including determining whether the first air pressure measurement is outside a first tolerance. The processor is configured to perform operations including
determining whether the second air pressure measurement is outside a second tolerance. The processor is configured to perform operations including responsive to the determining, sending an alert to a control center.

In an example, an asphalt mixing system includes a mixer configured to receive aggregate from a feeder and to mix the aggregate with binder into an aggregate mixture. The feeder is to provide the aggregate at a specified flow rate. The flow rate is adjustable. The system includes a heating element configured to receive a heating control signal and output heat to the mixer at a heat intensity level. The heat intensity level is proportional to the heating control signal. The system includes sensors, each sensor of the sensors configured to obtain a measurement from one or more of aggregate weight, moisture, and aggregate feed rate. The system includes a processor that is configured to: access predetermined moisture measurements, each moisture measurement corresponds to an ingredient of the mixture; receive, from the sensors, sensor outputs indicating measured parameters; apply one or more rules to the sensor outputs, the predetermined moisture measurements, and the heating control signal; determine, from the applied rules, a desired heating intensity; and provide a heating control signal to the heating element, the heating control signal corresponding to the desired heating intensity.

In an example, the processor is further configured to determine a flow rate and cause the feeder to provide the aggregate to the mixer at the flow rate.

In an example, the processor is further configured to receive an updated moisture measurements from an updated aggregate; apply the one or more rules to the updated moisture measurements; determine, from the applied rules, an updated heating intensity; and provide an updated heating control signal heating element, the updated heating control signal corresponding to the updated heating intensity.

In an example, an asphalt manufacturing system includes a machine configured to receive a control signal that controls an operation of the machine and to output a machine status signal indicating an operational status of the machine; a remote control unit including an alarm configured to receive an alarm input signal that causes the alarm to sound; and a snooze button configured to output a snooze signal when depressed; processor configured to: receive, from the machine, the machine status signal; responsive to receiving the machine status signal: provide the control signal to the machine, thereby causing the machine to stop; provide the alarm input signal to the remote control unit, thereby causing the alarm to sound; start a current timer; increment an alarm count; and start a cumulative timer; receive, from the machine, an updated machine status signal; and responsive to receiving the updated machine status signal: stop the current timer; stop the cumulative timer; provide an updated alarm signal to the remote control unit, thereby causing the alarm to stop; provide an updated control signal to the machine, thereby causing the machine to operate.

In an example, the processor is further configured to create a log including one or more of the current timer, the cumulative timer, or the alarm count; and provide the log to an external device.

In an example, the processor is further configured to receive, from the remote control unit, the snooze signal; and disable the alarm input signal, thereby causing the alarm to stop.

In an example, the processor is further configured to receive, from the machine, an additional machine status signal; responsive to receiving the additional machine status signal: provide the control signal to the machine, thereby causing the machine to stop; reset and restart the current timer; increment the alarm count; and start the cumulative timer.

In an example, a current measuring device configured to obtain a digital current measurement of current flowing to the machine, wherein the processor is further configured to: obtain the digital current measurement from the current measurement device; access a historical current measurement corresponding to the machine; compare the digital current measurement with the historical current measurement; and responsive to the comparison, identifying a maintenance activity to be performed on the machine.

The above techniques can be implemented by instructions stored tangible computer-readable media that cause a processor to perform various operations, computer-implemented methods, and/or operations involving a computer processor as part of a system.

### BRIEF DESCRIPTION OF THE DRAWINGS

Figure 1 depicts an example of an asphalt manufacturing plant, according to certain aspects.
Figure 2 depicts another example of asphalt manufacturing system, according to certain aspects.
Figure 3 depicts a diagram of a control system, according to certain aspects.
Figure 4 depicts a flowchart of an example of a computer-implemented process for implementing a three-way control switch for a motor, according to certain aspects.
Figure 5 depicts an example of a bag house, according to certain aspects.
Figure 6 depicts a flowchart of an example of a computer-implemented process for controlling operation of a bag house, according to certain aspects.
Figure 7 depicts a flowchart of an example of a computer-implemented process for controlling operation of a bag house, according to certain aspects.
Figure 8 depicts a flowchart of an example of a computer-implemented process for controlling operation of an bag house, according to certain aspects.
Figure 9 depicts a control system for a heating element within an asphalt manufacturing plant, according to certain aspects.
Figure 10 depicts a flowchart of an example of a computer-implemented process for controlling operation of an asphalt manufacturing plant, according to certain aspects.
Figure 11 depicts a flowchart of an example of a computer-implemented process for controlling operation of an bag house, according to certain aspects.
Figure 12 illustrates an example of a computing system that can be used in a controller system, according to certain aspects.

### DETAILED DESCRIPTION

Disclosed solutions relate generally to asphalt manufacturing systems. For instance, certain aspects relate to electrical and computer-based control systems that measure parameters within an asphalt manufacturing plant and control one or more pieces of equipment within the plant such as motors, baghouses, fans, exhausts, conveyors, and so forth.

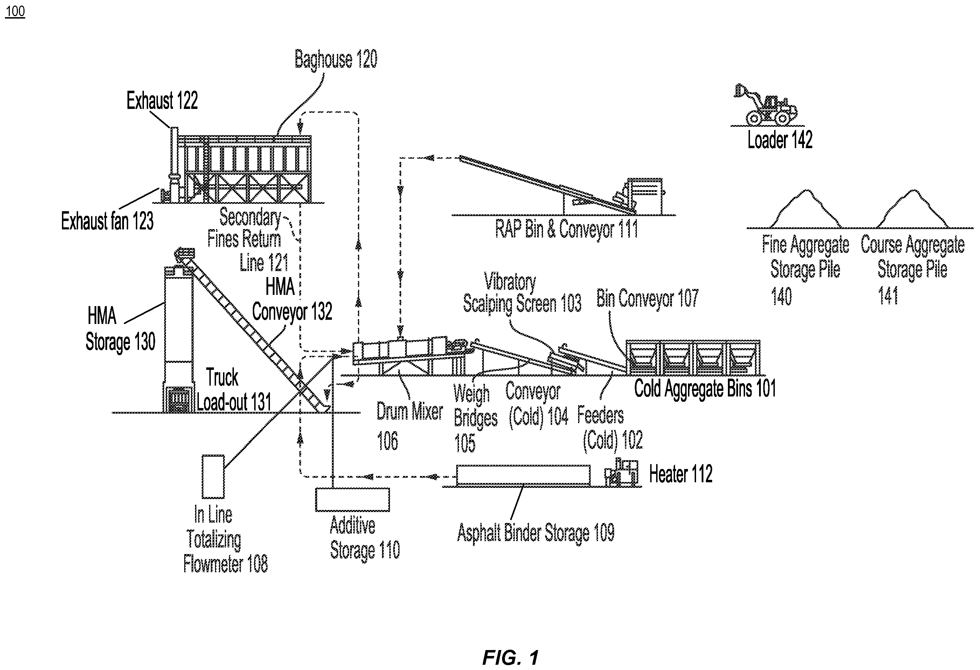

Figure 1 depicts an example of an asphalt manufacturing plant 100, according to certain aspects. The asphalt manufacturing plant 100 includes various components including, for example, cold aggregate bins 101, cold feeders 102, vibratory scalping screen 103, belt conveyor 104, weigh bridges 105, drum mixer 106, bin conveyor 107, in-line totalizing flowmeter 108, asphalt binder storage 109, additive storage 110, RAP bin and conveyor 111, heater 112, baghouse 120, secondary fines return line 121, exhaust 122, exhaust fan 123, Hot Mix Asphalt (HMA) storage 130, truck load-out 131, HMA conveyor 132, loader 142, fine aggregate storage pile 140, and course aggregate storage pile 141. In some instances, one or more of the components 101-142 may not be present in a particular asphalt manufacturing plant 100.

As explained herein, each component 101-142 can be controlled by one or more control systems that electronically measure control parameters and adjust settings on the manufacturing plant accordingly. Examples of parameters include flow rate, rotational speed, belt speed, pressure, and operational status. Examples of settings include conveyor belt speed, rotational speed, fan speed, and so forth.

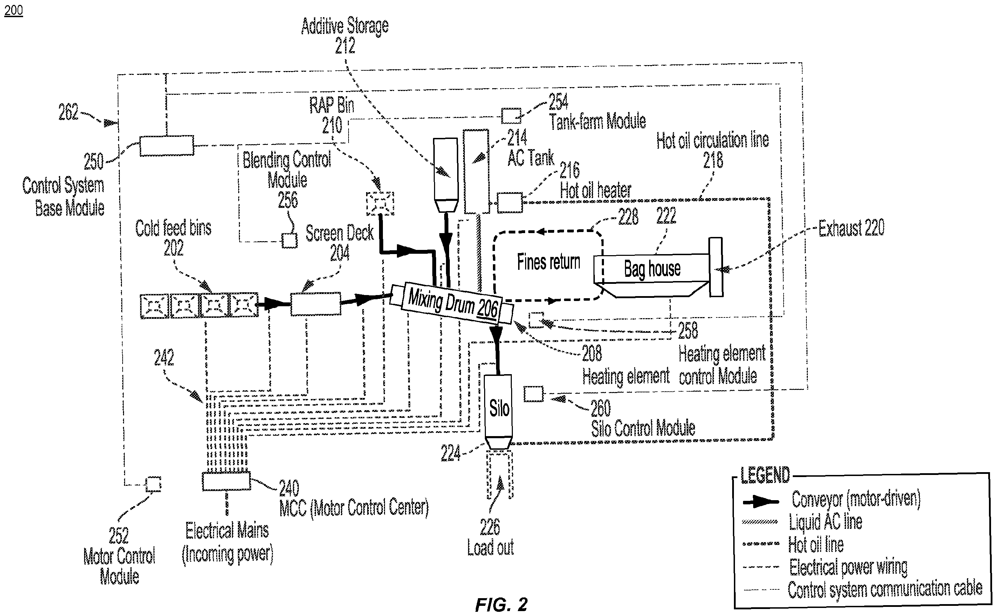

In some cases, a central control system can control the entire asphalt manufacturing plant 100 (as depicted in Figure 2). In other cases, separate control systems can control one or more components each. For example, a first control system can control the baghouse 120 and related components such as secondary fines return line 121, exhaust fan 123, and exhaust 122. A second control system can control the HMA conveyor 132, and so forth. These separate control systems can be interconnected via electrical control lines. The control systems can be aggregated into one or more panels of a control center, where an operator can view operational status and any alarms, and make appropriate changes. The control center is connected electronically with each individual component in the plant such as the weigh bridge, feeder, conveyor, etc.

In an example, cold aggregates are stored in fine aggregate storage pile 116 and course aggregate storage pile 117. At some point, loader 115, controlled by a driver, moves the aggregates to the cold aggregate bins 101 are proportioned by cold feeders 102 (cold-feed gates) and bin conveyor 107. Controls to the cold feeder 102 can regulate the amount of aggregate flowing from each bin, thereby providing a continuous, uniform flow of properly-graded aggregate. An example of a cold feeder 102 is a continuous belt feeder. The aggregates are passed through the vibratory scalping screen 103 on to belt conveyor 104 (or bucket elevator). Controls can adjust an opening size of a gate and/or a speed of the belt.

In turn, the belt conveyor 104 passes the aggregates to the weigh bridges 105, where the aggregate is weighed. A flow rate of the aggregate may be determined by different methods such as physically weighing the aggregate delivered over a period of time. The weigh bridges 105 provide the aggregates to the drum mixer 106.

The drum mixer 106 can be connected to or can include a dryer (not depicted). The mixed aggregates are passed to the dryer, where the aggregate is dried and heated. If the plant is capable of producing recycled mixes then a RAP bin and conveyor 113 is used to bring additional material to the drum mixer 106.

Baghouse 120 includes one or more exhaust fans 123, one or more exhausts 122 that vent exhaust gases to the atmosphere and secondary fines return line 121. Dryer exhaust mainly composed of water-vapor, combustion by-products and dust enters the baghouse 120, which passes exhausts to the atmosphere via fans 119 and collects dust on one or more bags.

When needed, the heated aggregates are measured in controlled amounts in to a weigh box. The aggregates are then dumped into a mixing chamber or pugmill, along with the proper amount of mineral filler, if needed, from a mineral filler storage. In some cases, a screening unit separates the material into different sized fractions and deposits the aggregates into separate hot bins for temporary storage.

Heated asphalt binder from asphalt binder storage 109 is pumped into an asphalt binder weigh bucket, (or passed through a flow-measurement device) which measures the weight (or volume) of the asphalt binder prior to delivering it to the mixing chamber where it is mixed thoroughly with the aggregates baghouse fines or mineral filler.

From the mixing chamber, the asphalt mix is passed to HMA conveyor 132, which empties into HMA storage 130, where the asphalt mix can be deposited into trucks or delivered into storage silos or surge bins. Further, when anti-strip additives are introduced at the plant site, an additive storage tank and a totalizing flowmeter can be used.

Figure 2 depicts another example of asphalt manufacturing system 200, according to certain aspects. Figure 2 includes one or more components depicted in Figure 1, e.g., manufacturing components. Figure 2 further depicts control systems for controlling the operation of the manufacturing components and electrical power lines to provide electrical power to the manufacturing components.

Asphalt manufacturing system 200 includes one or more of cold feed bins 202, screen deck 204, mixing drum 206 (e.g. 106), heating element (burner) 208, RAP bin 210 (e.g., 113), additive storage 212 (e.g. 111), Asphalt Cement (AC) tank 214, hot oil heating element 216, hot oil circulation line 218, exhaust 220, bag house 222 (e.g., 118), silo 224 (e.g., HMA storage 10), load out 226, fines return 228, motor control center 240, electrical power lines 242, control system base module 250, motor control module 252, tank farm module 254, blending control module 256, heating element control module 258, silo control module 260, and communication lines 262. Heating element 208 can use hydrocarbon fuel (natural gas, diesel, or other fuel oils) to generate a flame to dry the aggregates.

Tank farm module 254 is co-located with the AC tank 214. Tank farm module 254 can include one or more pressure sensors or volume sensors. Blending control module 256 can be located near mixing drum 206 and/or RAP bin 210. Blending control module 256 can include sensors such as temperature, pressure, weight, and so forth. Heating element control module 258 can be located with heating element 208. Heating element control module 258 can include sensors such as temperature, pressure, gas and air flow rate. Silo control module 260 can be located with silo 224. Examples of sensors included in silo control module 260 include weight and volume. In some cases, silo control module 260 can detect when silo 224 is becoming full, and can cause a hot stop.

Components 202-228 can be monitored and/or controlled by motor control center 240. Control system base module 250 connects to the other control modules, e.g., motor control module 252, tank farm module 254, blending control module 256, heating element control module 258, silo control module 260, and/or communication lines 262. The other control modules can be connected with each other and/or with control system base module 250 via one or more data connections. Control system base module 250 can be integrated with or connected to the motor control center 240.

Communication lines 262 can include electrical, optical, wireless, or other connections. In some cases, communication lines 262 can be routed together with other connections such as electrical power lines 242, or other connections. Communication lines 262 can also implement networking protocols such as the transport control protocol / internet protocol (TCP/IP) such that communication between control modules is performed over a network. Similarly, some or all of communication lines 262 can involve wireless communications such as WiFi e.g., IEEE 802.11, cellular networks, and so forth.

Motor control center 240 can be located near one or more of the components 220-228 or can be placed some distance away, for example, out of visible range. In some cases, motor control center 240 can be located in an elevated building such that an operator of the motor control center 240 may view the components from afar. As depicted, electrical power enters the motor control center 240 by way of one or more electrical power lines. Outgoing electrical power lines 242 supply electrical power to motors driving various components of the asphalt production plant. Motor control center 240 can include circuit breaker panels for electrical power lines 242. In some cases, motor control center 240 can include current measuring devices that can obtain real-time measurements from the electrical power lines 242. The current measuring devices can measure current on one or more phases of electrical power and can provide the measurements digitally over communication cables to the control system base module 250 via the motor control module 252.

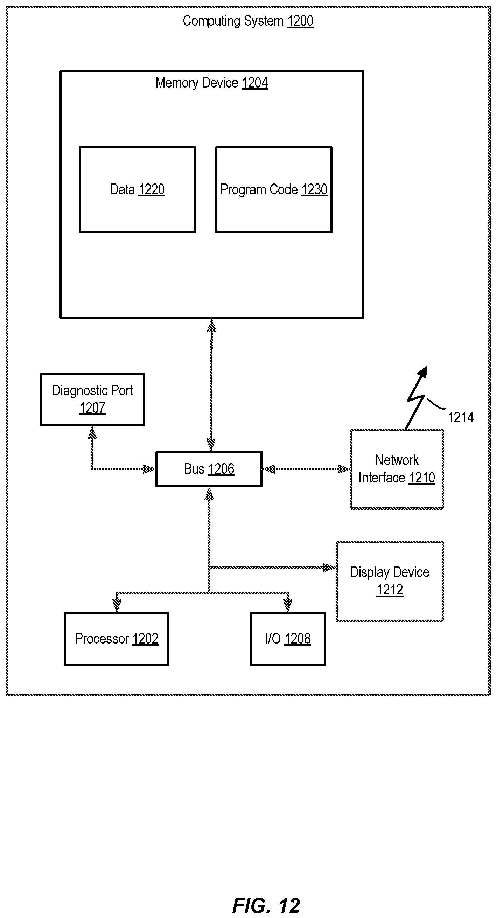

Controller functionality can be apportioned in any manner between control system base module 250 and the other control modules. Each module can include one or more computing systems. An example of a computing system 1200 is discussed with respect to Figure 12. Accordingly, control system base module 250 can include various processors, memories, network interfaces, etc.

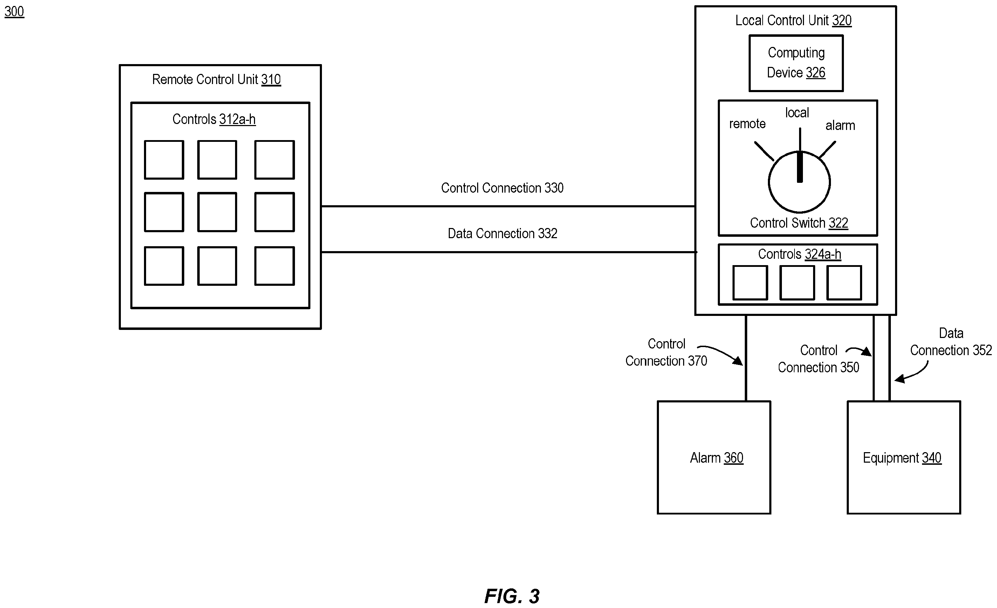

In an aspect, disclosed solutions improve the operation and safety of asphalt manufacturing plants by safely managing equipment control between a local control unit and a remote control unit. More specifically, certain aspects provide a three-way switching mechanism that integrates alarm signaling and equipment control. Given safety requirements, an alarm is sounded before equipment begins to activate to ensure users are safely away from equipment. Figure 3 depicts such a switching mechanism.

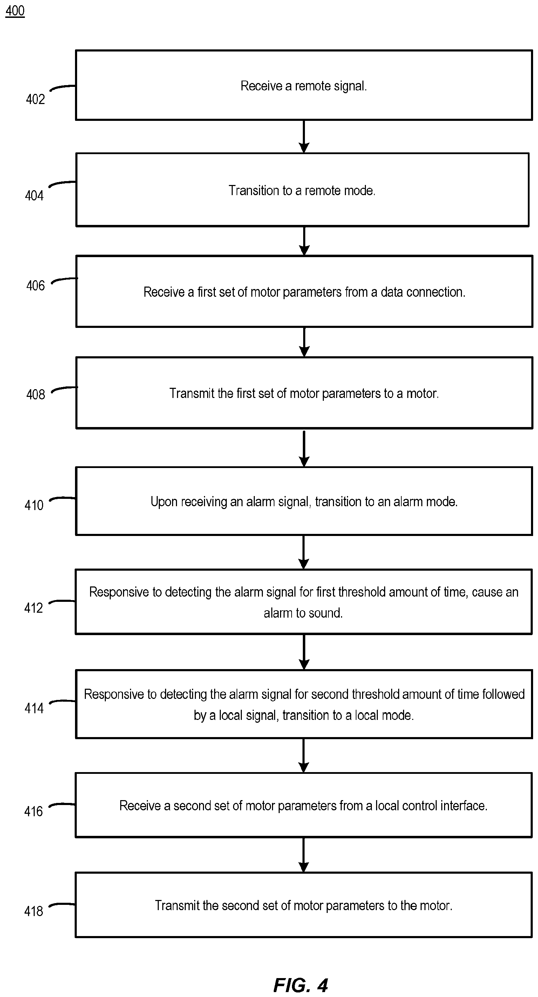

Figure 3 depicts a diagram of control system 300, according to certain aspects. Control system 300 includes one or more of remote control unit 310, local control unit 320, control connection 330, data connection 332, equipment 340, control connection 350, data connection 352, alarm 360, and control connection 370. Control system 300 can control one or more pieces of equipment such as motors, fans, etc., and can be combined with control functionality described herein as depicted in Figures 4-11.

In the example depicted in Figure 3, control over equipment 340 is passed between remote control unit 310 and local control unit 320. Local control unit 320 and remote control unit 310 can be located any distance apart. For example, local control unit 320 can be physically separate from remote control unit 310. In an example, remote control unit 310 is within a control station (control house) that is staffed by one or more operators and local control unit 320 is within a building near the equipment, staffed by a local operator. The local control unit 320 may or may not be visible to the operators of remote control unit 310 and vice versa.

Remote control unit 310 includes controls 312a-h. Controls 312a-h can control one or more pieces of equipment, including but not limited to equipment 340. Examples of controllable equipment include, but are not limited to, control cold feed bins 202, screen deck 204, mixing drum 206, silo 224, bag house 222, exhaust 220, additive storage 212, and RAP bin 210. More specifically, each piece of equipment can include remotely controllable motors, servos, vents and so forth. For example, a given piece of equipment can have one or more Variable Frequency Drive (FFD) motors. To control a VFD motor, a frequency of an alternating current (AC) signal is adjusted to control the speed of the motor.

Local control unit 320 includes control switch 322, controls 324a-h, and computing device 326. Controls 324a-h can control equipment 340, subject to control being granted by an appropriate configuration of control switch 322. Computing device 326 is shown as within local control unit 320. But computing device 326 can be located remotely, e.g., within remote control unit Examples of computing device 326 include computing system 1200 depicted in Figure 12.

Control switch 322 can operate in one of three positions: remote, local, and alarm. The switch position can control an operating mode of computing device 326. When in the remote position, control switch 322 causes computing device 326 to disable controls 324a-h from controlling equipment 340. When in the local position, control switch 322 causes computing device 326 to enable local control of equipment 340 via controls 324a-h.

In some cases, control switch 322 is spring-loaded such that control switch 322 must be held in the alarm position and will automatically revert back to the local position when released. In one implementation, control switch 322 can output one of three signals: remote, indicating the switch is in the remote position; local, indicating the switch is in the local position; and alarm, indicating the switch is in the alarm position. In other implementations, a particular signal can be indicated by a combination of multiple signals (e.g., a two digit binary signal). Accordingly, computing device 326 can operate in one of three modes: remote, local, or alarm based in part on the output of control switch 322.

Remote control unit 310 and local control unit 320 can be located at different locations within an asphalt manufacturing plant. For instance, remote control unit 310 can be located in the motor control center 240 and local control unit 320 can be located near equipment 340. But different locations of the control units are possible.

Remote control unit 310 and local control unit 320 are connected via control connection 330 and data connection 332. In an example, control connection 330 can be low voltage control connection that represents whether remote control unit 310 or local control unit 320 have control of equipment 340. For instance, in one configuration, a high voltage indicates remote control unit 310 has control. Data connection 332 is a digital connection that carries one or more configuration parameters such from remote control unit 310 to local control unit 320. Examples of data connections include Ethernet, fiber optical connections, and so forth.

Local control unit 320 passes commands to equipment 340, as determined by controls 324a-h or by remote control unit 310 (depending on the configuration of control switch 322). In particular, control connection 350 and data connection 352 are passed to equipment 340. Local control unit 320 can also pass control connection to alarm 360 to cause alarm 360 to sound as appropriate. Alarm 360 can be employed to meet plant safety criteria, for example, to warn users in the area before any machinery starts to operate. While one alarm is shown, multiple alarms can be interconnected and triggered together. For instance, alarms can be spread around machinery such that an audible tone is always able to be heard by any persons in the area.

Figures 4, 6-8, 10, and 11 illustrate example flow diagrams showing processes 400, 600, 700, 800, 1000, and 1100, according to at least a few examples. These processes, and any other processes described herein are illustrated as logical flow diagrams, each operation of which represents a sequence of operations that can be implemented in hardware, computer instructions, or a combination thereof. In the context of computer instructions, the operations may represent computer-executable instructions stored on one or more non-transitory computer-readable storage media that, when executed by one or more processors, perform the recited operations. Generally, computer-executable instructions include routines, programs, objects, components, data structures and the like that perform particular functions or implement particular data types. The order in which the operations are described is not intended to be construed as a limitation, and any number of the described operations can be combined in any order and/or in parallel to implement the processes.

Additionally, some, any, or all of the processes described herein may be performed under the control of one or more computer systems configured with specific executable instructions and may be implemented as code (e.g., executable instructions, one or more computer programs, or one or more applications) executing collectively on one or more processors, by hardware, or combinations thereof. As noted above, the code may be stored on a non-transitory computer readable storage medium, for example, in the form of a computer program including instructions executable by one or more processors. The processes described herein may be performed by computing system 1200 as depicted with respect to Figure 12, e.g., processor 1202. In some cases, multiple computing systems and/or processors are used to implement these processes.

Figure 4 depicts a flowchart of an example of a computer-implemented process 400 for implementing a three-way control switch for a motor, according to certain aspects. Process 800 can be implemented by any computing device, such as processor 1202 of computing system 1200, or computing device 326. For example purposes, process 400 is discussed as performed by computing device 326. Further, it will be appreciated that the operations of process 400 may be performed in a different order and/or individual operations may be skipped in some cases.

At operation 402 of process 400, computing device 326 receives a remote signal. The remote signal indicates that a switch is in the remote position. Control switch 322 outputs a remote signal to computing device 326. In some examples, when in remote mode, computing device 326 disables controls (e.g., controls 324a-h) from being able to control equipment such as equipment 340.

At operation 404 of process 400, computing device 326 transitions to the remote mode. In the remote mode, remote control unit 310 is in control of equipment 340.

At operation 406 of process 400, computing device 326 receives a first set of motor parameters from a data connection. Remote control unit 310 can pass motor parameters via data connection 332 to the local control unit 320.

At operation 408 of process 400, computing device 326 transmits the first set of motor parameters to a motor. Local control unit 320 in turn passes the motor parameters to equipment 340 via data connection 352 and/or control connection 350. In some cases, the first set of motor parameters can be received over a first protocol (e.g., Ethernet) that is different from a second protocol (e.g., as discussed with respect to operation 416).

In an example implementation, the local control unit 320 sends two signals to a VFD module that is located in the local control unit 320 or equipment 340. The VFD module stores parameters such as a speed reference and the starting source. The starting source indicates which of remote control unit 310 and local control unit 320 is in control of the equipment 340. The first set of parameters, therefore, can be VFD parameters.

At operation 410 of process 400, computing device 326, upon receiving an alarm signal, transitions to the alarm mode. Control switch 322 outputs an alarm signal, which is passed to computing device 326.

At operation 412 of process 400, computing device 326, responsive to detecting the signal for first threshold amount of time, causes an alarm to sound.

At operation 414 of process 400, computing device 326, responsive to detecting the signal for a second threshold amount of time followed by detecting a local signal, transitions to the local mode.

Accordingly, when in the alarm mode, if the user does not maintain control switch 322 in the alarm position for a sufficiently long period of time (e.g., the second threshold amount of time), then computing device 326 will to transition back to the remote mode. The second threshold amount of time can be greater than the first threshold amount of time (e.g., 30 seconds versus 15 seconds respectively).

After the second threshold of time, a startup window opens, during the startup window, the user must start the equipment 340, for example, via controls 324a-h. If the equipment is not started during the startup window, then the startup window expires and the process must be restarted.

In some cases, when in local mode, computing device 326 can send a message to remote control unit 310 indicating the local mode is active. In this manner, an operator of remote control unit 310 is aware that control is not available. In some cases, when in local mode, computing device 326 can enable local control of equipment 340 via controls 324a-h.

At operation 416 of process 400, computing device 326 receives a second set of motor parameters from a local control interface. For instance, computing device 326 receives a second set of motor parameters from controls 324a-h.

In some cases, the local control interface can operate on a second protocol that is different from the first protocol. For instance, the second protocol can be a protocol compatible with a human interface module (HIM).

At operation 418 of process 400, computing device 326 transmits the second set of motor parameters to the motor. For instance, computing device 326 transmits the second set of motor parameters to equipment 340 via control connection 350 and/or data connection 352.

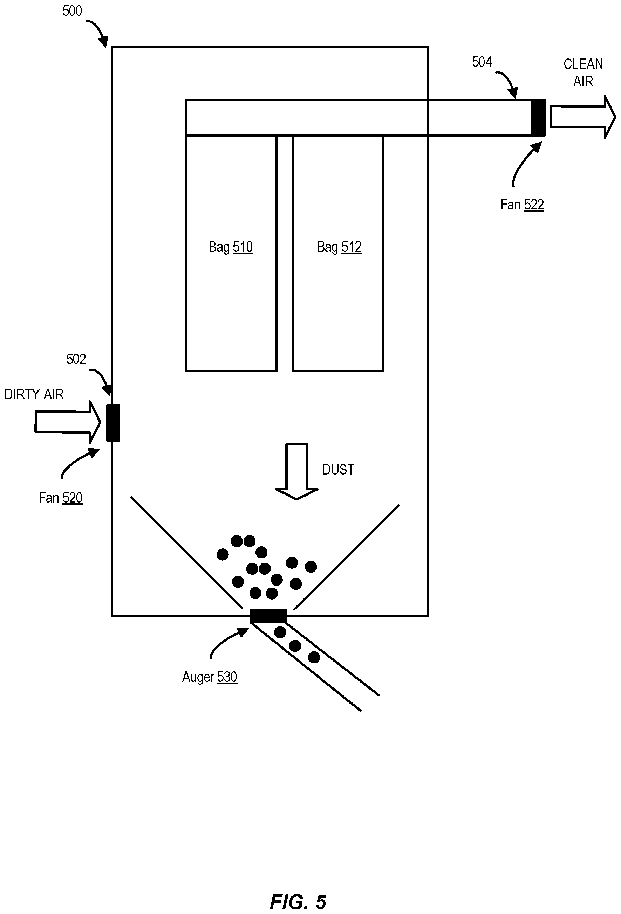

Figure 5 depicts an example of a bag house 500, according to certain aspects. Bag house 500, which includes one or more of input 502, output 504, air bag 510, air bag 512, fan 520, fan 522, and auger 530. While two air bags and two fans are depicted, any number of fans and bags can be included. In some cases, fan 520 can include an input pressure gauge and fan 522 can include an output pressure gauge. Other examples of bag houses include bag house 118 as depicted in Figure 1 and bag house 222 as depicted in Figure 2.

In a simplified example, dirty air is sucked through input 502 by fan 520, through air bags 510 and 512. Dust from the dirty air collects in air bags 510 and 512 and/or drops down to auger 530, where the dust is fed back into the asphalt process or is collected for disposal. Fan 522 removes the cleaned air through the output 504.

Together, fans 520 and 522 create a differential pressure which can be calculated by a difference in pressure between the output pressure and the input pressure. The differential pressure can be measured and adjusted as appropriate.

In an aspect, disclosed systems detect and recover from auger 530 being turned off. If auger 530 is turned off while bag house 500 is still operational, then dangerous or dirty conditions can occur in bag house 500, which can in some cases cause a shutdown of the plant.

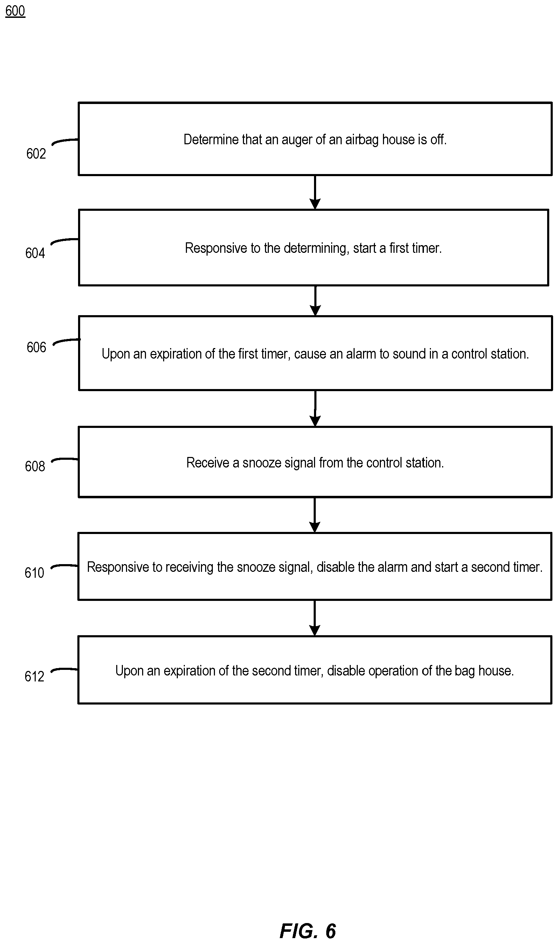

Figure 6 depicts a flowchart of an example of a computer-implemented process 600 for controlling operation of a bag house, according to certain aspects. Process 600 can be implemented by any computing device, such as processor 1202 of computing system 1200, or computing device 326.It will be appreciated that the operations of process 600 may be performed in a different order and/or individual operations may be skipped in some cases.

At operation 602 of process 600, a computing device (e.g., computing system 1200) determines that an auger of an bag house is off. For instance if auger 530 is disabled, a sensor on auger 530 can output a signal to the computing device. Reasons for auger 530 being disabled include a blockage, an equipment malfunction, or an operator having disabled auger 530.

At operation 604 of process 600, the computing device, responsive to the determining, starts a first timer. Examples of first timer length are 10 minutes and 30 minutes. But the timer lengths can be preconfigured and/or adjusted.

At operation 606 of process 600, the computing device, upon an expiration of the first timer, causes an alarm to sound in a control station. Once the first timer has expired, an alarm is triggered at the control house. For instance, the computing system provides an alarm input signal to the alarm.

At operation 608 of process 600, the computing device receives a snooze signal from a control station (control house). The operator may snooze (or shelve) the alarm by pushing a control that sends a control signal to the computing device. The operator can snooze the alarm indefinitely. But in that case, the computing device can shut down the bag house (or the plant entirely) if the alarm is not acknowledged within a predefined time.

At operation 610 of process 600, the computing device, responsive to receiving the snooze signal, disables the alarm and starts a second timer. The alarm to be disabled by removing the alarm input signal from the alarm and starts a second timer.

At operation 612 of process 600, the computing device, upon an expiration of the second timer, disables operation of the bag house. In some cases, disabling operation of the bag house includes disabling operation of the fans that cause air to flow through the bag house.

Over each iteration, a number of alarms and/or snoozes can be logged. The number of alarms and/or snoozes can be provided to a user interface, for example located within the control station or on an external display for a supervisor to view. Auger 530 can be re-enabled when any issues are resolved.

In an aspect, disclosed solutions provide improvements to management of rotors in a bag house of an asphalt manufacturing plant. For instance, a bag house may have several rotors. But from time to time, a rotor may stop working and shut down. Typically, this can cause the bag house to shut down because performance is improved when the rotors all run continuously. For instance, the differential pressure in bag house 500 may be increased as a result of air bags 510 and/or 512 being dirty.

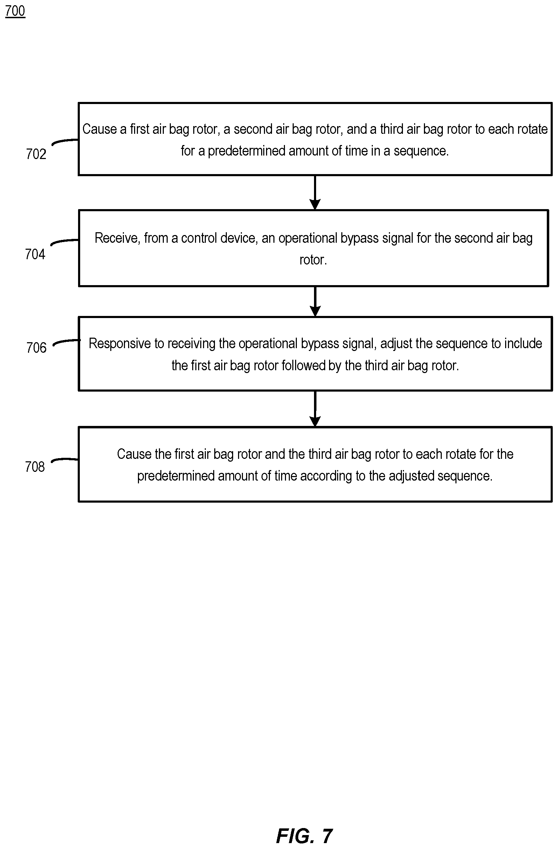

Figure 7 depicts a flowchart of an example of a computer-implemented process 700 for controlling operation of a bag house, according to certain aspects. It will be appreciated that the operations of process 700 may be performed in a different order and/or individual operations may be skipped in some cases.

Process 700 is described with respect to a bag house that has three rotors that normally operate in a 1-2-3 sequence, but any number of rotors and any sequence is possible. Process 700 permits an operator to bypass (disable) a rotor in a rotor system on a temporary basis while keeping the bag house operational, thereby increasing plant uptime.

At operation 702 of process 700, a computing device (e.g., computing device 326 or computing system 1200) causes a first air bag rotor, a second air bag rotor, and a third air bag rotor to each rotate for a predetermined amount of time in a sequence. The sequence includes the first air bag rotor, followed by the second air bag rotor, followed by the third air bag rotor. Accordingly the computing device causes power to pulse a first input signal to the first rotor, followed by a second input signal to the second rotor, followed by a third input signal to the third rotor.

At operation 704 of process 700, the computing device receives, from a control device, an operational bypass signal for the second air bag rotor. For instance, a control station, for example, motor control center 240, requests that the second air bag rotor be bypassed.

At operation 706 of process 700, the computing device, responsive to receiving the operational bypass signal, adjusts the sequence to includes the first air bag rotor followed by the third air bag rotor. Accordingly, the sequence no longer includes the second air bag rotor.

At operation 708 of process 700, the computing device, causes the first air bag rotor and the third air bag rotor to each rotate for the predetermined amount of time according to the adjusted sequence. Accordingly the computing device causes power to pulse a first input signal to the first rotor followed by a third input signal to the third rotor. Operation 308 can repeat.

In an aspect, once one rotor is bypassed, e.g., a first bypass signal has been received, additional bypass requests are ignored. For instance, considering the example above, if the computing device receives an additional operational bypass signal for the first air bag rotor, then the computing device ignores subsequent bypass signals and continues operation as previously adjusted. For instance, the computing device again causes the first air bag rotor and the third air bag rotor to each rotate for the predetermined amount of time according to the adjusted sequence by pulsing the first input signal followed by the third input signal.

In an aspect, disclosed solutions include improved pressure monitoring in bag houses. For instance, disclosed solutions measure pressure in multiple places within the bag house. Measuring pressure at different points can improve plant performance.

In contrast, existing systems use a single differential pressure gauge to determine whether bag-house inlet and outlet pressures are within tolerance. By contrast, by using two pressure sensors, and using a control system to calculate a differential pressure certain aspects eliminate a need for a differential gauge and can provide additional functionality.

In a more detailed example, bag house 500 uses input 502 to receive fresh air and includes a first air pressure sensor configured to output a first air pressure measurement. Air bag house 500 has air output 504 that is configured to output air and includes a second air pressure sensor configured to output a second air pressure measurement.

By comparing the second and first air pressure measurements, a differential pressure can be calculated. A higher differential pressure can indicate the air bags are dirty, whereas a lower differential pressure can indicate that the air bags are clean.

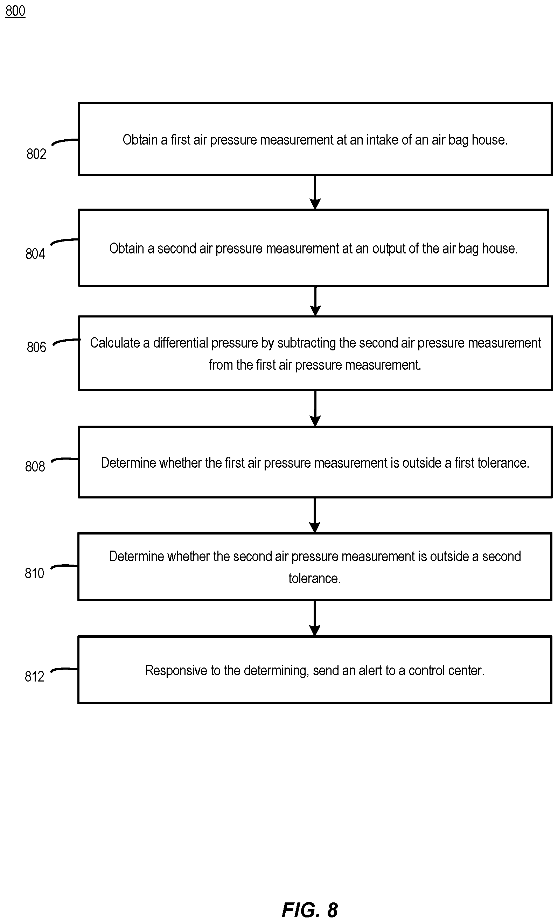

Figure 8 depicts a flowchart of an example of a computer-implemented process 800 for controlling operation of an bag house, according to certain aspects. It will be appreciated that the operations of process 800 may be performed in a different order and/or individual operations may be skipped in some cases. Process 800 can be implemented by any computing device, such as processor 1202 of computing system 1200, or computing device 326.

At operation 802 of process 800, a computing device obtains a first air pressure measurement from an intake of the bag house. Examples of typical air pressure include 10 Pounds Per Square-Inch (PSI) and 5-20 PSI.

At operation 804 of process 800, the computing device obtains a second air pressure measurement from an output of the bag house. Examples of typical air pressure include 6 PSI and 5-20 PSI.

At operation 806 of process 800, the computing device calculates a differential pressure by subtracting the second air pressure measurement from the first air pressure measurement. Using the example above, the differential pressure is 4 PSI.

At operation 808 of process 800, the computing device determines whether the first air pressure measurement is outside a first tolerance. Examples of tolerances are 4 PSI and 10 PSI.

At operation 810 of process 800, the computing device determines whether the second air pressure measurement is outside a second tolerance. Examples of tolerances are 4 PSI and 10 PSI. The second tolerances be the same as or different from the first tolerance.

Advantages include being able to identify a rise of the pressure on the bag-house inlet and the outlet in addition to being able to measure differential pressure. For example, inlet and outlet pressures may rise in unison, for example, due to as atmospheric air being sucked in through cracks or punctures in the structure upstream of the bag-house inlet pressure gauge, and leakages in the bags causing the bag-house outlet air pressure to rise). Existing systems, limited to measuring differential pressure, are not able to detect these errors. Additionally, heating element (burner) efficiency can be improved by detecting any higher pressure upstream from the bag-house.

At operation 812 of process 800, the computing device, responsive to the determining, sends an alert to a control center. The termination of an abnormal condition can cause the air bag house to shut down or maintenance to be performed. For example, the computing device can stop the normal flow of air and perform a cleaning operation to remove any excess accumulated dust. In another example, the computing device can adjust a size of an air vent that permits air flow over the heating element.

In another aspect, disclosed solutions improve a quality of manufactured asphalt by adjusting heating element settings in real time. For instance, during the course of a day as the asphalt plant adjusts to temperature and/or environment changes, a quality of the produced asphalt may degrade, resulting in output requirements not being met. To address this concern, disclosed solutions can receive real-time updates of certain parameters such as moisture content, belt-scale input, and aggregate feed time, and adjust an output of one or more heating elements accordingly.

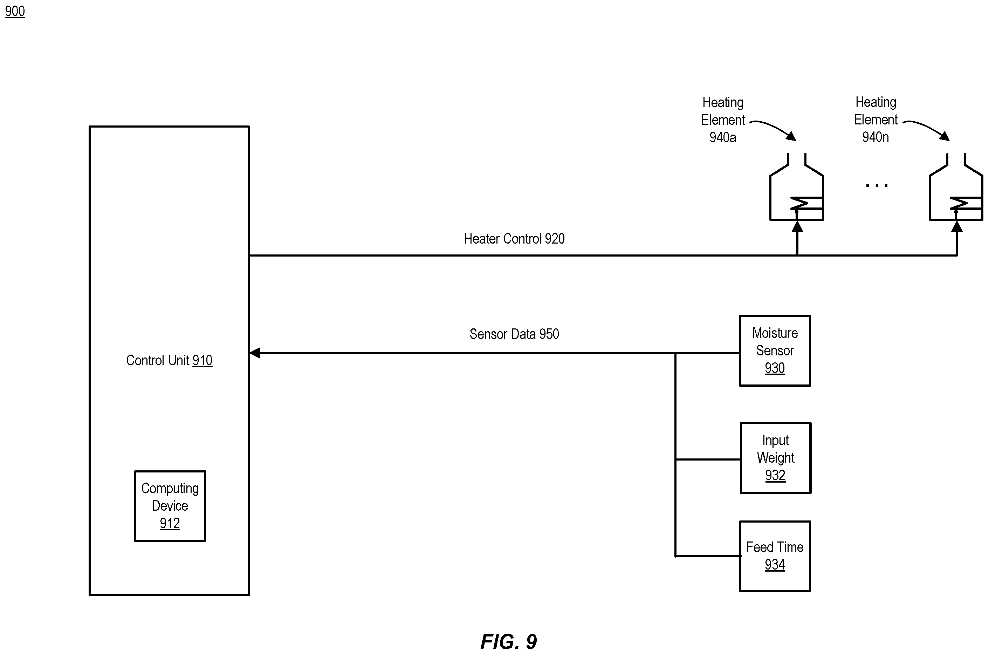

Figure 9 depicts a control system for a heating element within an asphalt manufacturing plant, according to certain aspects. Figure 9 depicts control system 900, which includes one or more of control unit 910, heating element control 920, heating elements 940an, sensor data 950, moisture sensor 930, input weight 932, and feed time 934.

In the example depicted in Figure 9, control unit 910, receives sensor data 950 from moisture sensor 930, input weight 932, and feed time 934. Using computing device 912 in conjunction with rules, algorithms, and/or learning systems, control unit 910 determines any necessary adjustments to heating element 940a-n.

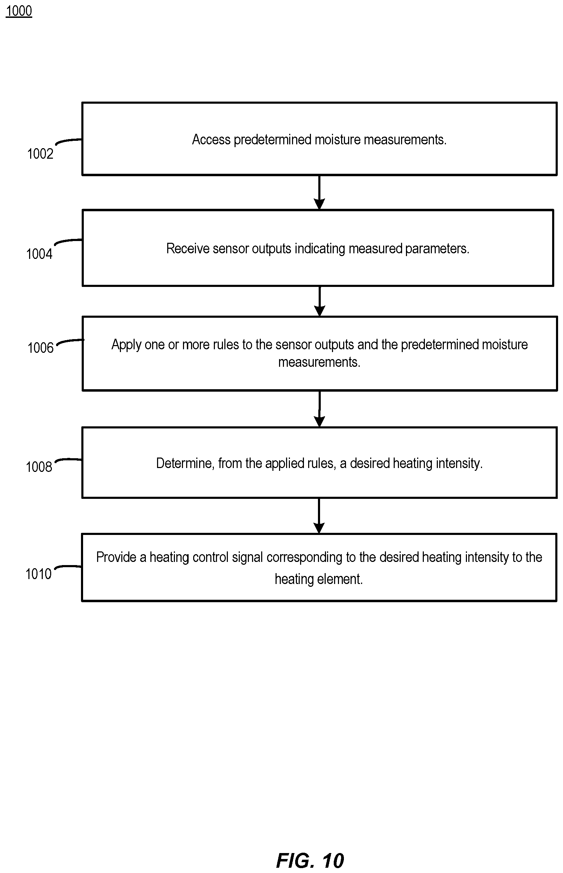

Figure 10 depicts a flowchart of an example of a computer-implemented process 1000 for controlling operation of an asphalt manufacturing plant, according to certain aspects. It will be appreciated that the operations of process 1000 may be performed in a different order and/or individual operations may be skipped in some cases. Process 1000 can be used to determine output parameters (e.g., heating intensity) based on parameters measured prior to starting the manufacturing process and/or parameters determined at runtime during the process. Process 1000 can be implemented by any computing device, such as processor 1202 of computing system 1200, or computing device 326. In some cases, process 1000 can be implemented by heating element control module 258.

At operation 1002 of process 1000, computing device 912 accesses predetermined moisture measurements. Each moisture measurement corresponds to an ingredient of the aggregate mixture (e.g. stored in cold feed bins 202). Different aggregates from different vendors may have different properties. These properties may also be impacted by storage (including ambient) conditions prior to being loaded into the cold feed bins. Accordingly, the parameters may be adjusted if a new aggregate is received or loaded into the cold feed bins.

At operation 1004 of process 1000, computing device 912 receives sensor outputs indicating measured parameters. For instance, sensors located at blending control module 256 and/or heating element control module 258 can measure more parameters such as aggregate weight, moisture, and aggregate feed rate.

At operation 1006 of process 1000, computing device 912 applies one or more rules to the sensor outputs and the moisture measurements. The computing device can use algorithmic and/or learning-based approaches. For instance, a set of rules can be developed and applied at runtime. In other cases, a learning based approach can be used, for example, by providing feedback or training data to the computing device such that the computing device determines the rules itself over time. Examples of learning-based approaches include machine learning and predictive modelling.

At operation 1008 of process 1000, computing device 912 determines, from the applied rules, a desired heating intensity. Based on the rules applied at operation 1006, the computing device determines a heating intensity that is appropriate for the aggregate mix, given updated conditions.

At operation 1010 of process 1000, computing device 912 provides a heating control signal to the heating element. The heating control signal corresponds to the desired heating intensity. Examples of heating elements include heating element 208 depicted in Figure 2.

In some cases, the computing device can determine a flow rate and then cause the feeder provide the aggregate to the mixer at the flow rate. For instance, the computing device can determine a flow rate that may be required based on the application of the rules, and then cause the feeder to provide the aggregate to the mixer at the flow rate.

In another aspect, the computing device can update the heating intensity in response to a different aggregate mix. For instance, an updated set of measurements can be obtained for the different aggregate mix. These measurements can include moisture. The computing device applies the rules (e.g., the rules applied in operation 1006), do the new measurements, optionally in conjunction with the sensor outputs, the original moisture measurements, or the heating control signal. The computing device determines an updated heating intensity from the application of the rules and adjusts the intensity provided by the heating element accordingly.

Certain aspects involve an improved hot-stop timer and management system. A shut down of the asphalt manufacturing plant while operational, e.g., while hot asphalt is being made, can be referred to as a "hot stop." A small number of hot stops is expected, for instance when silo 224 is full and waiting for trucks to remove the finished asphalt. But hot stops should be minimized as hot stops reduce the efficiency of the plant and require that the time of the hot stop be closely monitored. For instance, if a hot stop lasts too long, then the asphalt may solidify and become unusable.

Disclosed solutions enable improved management of hot stops by maintaining not only a timer for a given hot stop, but also a number of hot stops and/or a cumulative amount of time spent on hot stops.

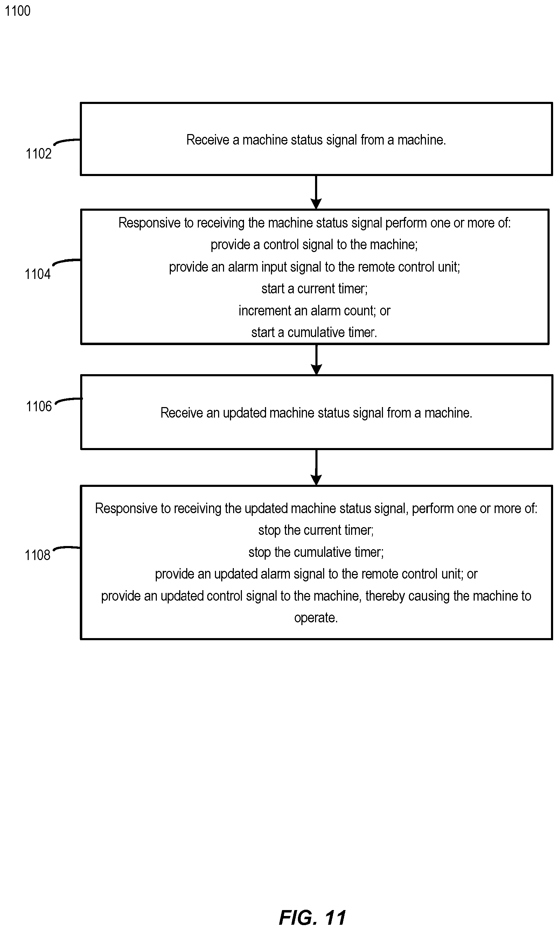

Figure 11 depicts a flowchart of an example of a computer-implemented process 1100 for controlling operation of an bag house, according to certain aspects. It will be appreciated that the operations of process 1100 may be performed in a different order and/or individual operations may be skipped in some cases. Process 1100 can be implemented with respect to any individual machine within asphalt manufacturing system 200. For instance, silo control module 260 can use process 1100 to monitor silo 224.

At operation 1102 of process 1100, a computing device receives, from the machine, a machine status signal. The machine status signal indicates an operational status of the machine, for example, whether the machine is operational or not operational. In an example, the machine status signal can indicate that the silo 224 is full, requiring a hot stop. The machine can also accept a control signal input that permits remote control of the operation of the machine.

At operation 1104 of process 1100, the computing device, responsive to receiving the machine status signal, performs one or more operations. The operations can include providing the control signal to the machine (thereby causing the machine to stop), providing the alarm input signal to the remote control unit (thereby causing the alarm to sound), starting a current timer, incrementing an alarm count; and starting a cumulative timer.

Continuing the example, the computing device can provide the control signal to the machine and cause the machine to stop. The computing device can also provide an alarm input signal to an alarm, thereby causing an alarm to sound. The alarm can be located in the motor control center 240 such that an operator can hear the alarm. Duplicate alarms can also be located in other places, for example, near silo 224. In an aspect, the alarm may be snoozed, or temporarily disabled. But in this case, the timers keep running to maintain an accurate count of the hot stop time.

The computing system starts various timers. For instance, the computing system increments a hot stop count. The computing system also starts a current timer, which can be displayed on a display in the control center. The computing system also starts a cumulative timer, which measures the cumulative amount of time that the manufacturing system has been idle, or the sit time.

At operation 1106 of process 1100, the computing device receives, from the machine, an updated machine status signal. The updated machine signal indicates that the reason for the hot stop has been cleared. For instance, silo 224 may no longer be full.

At operation 1108 of process 1100, the computing device, responsive to receiving the updated machine status signal, performs one or more operations. The operations include stopping the current timer, stopping the cumulative timer, providing an updated alarm signal to the remote control unit, thereby causing the alarm to stop, providing an updated control signal to the machine, thereby causing the machine to operate.

The current timer can be reset so that it is ready to time the next hot stop. The cumulative timer pauses but is restarted upon a next hot stop. For example, if a next hot stop occurs, then the computing devices receives an additional machine status signal indicating an additional error at the machine. After receiving the additional machine status signal, the computing device causes the machine to stop by sending a control signal to the machine. The computing device resets and restarts the current timer so that the timer represents this hot stop. The computing device increments the alarm count to represents the total number of hot spots encountered and starts the cumulative timer. The cumulative timer therefore represents a total time spent in all the hot stops.

This process can continue. For instance, when the machine starts again, and stops again, the counter goes to three, the current timer begins at zero and the cumulative timer begins at the end time of the second hot stop. In this manner, hot stop data is collected and stored and can later be used to measure plant efficiency. For example, if a first hot stop occurs and lasts for 15 minutes, and a second hot spot later occurs and lasts for 30 minutes, then a cumulative timer reads 45 minutes (the total of 15 and 30 minutes). A hot stop count timer would read 2, indicating that two hot stops occurred.

In an aspect, disclosed solutions improve the reporting and recording of alarms that occur in asphalt manufacturing systems. For instance, during an operating shift, from time to time, alarms may sound. Disclosed solutions automatically log these alarms and aggregate them into reports. Disclosed solutions capture a number and types of alarms that can be triggered and, depending on certain conditions (e.g., thresholds, types of alarms, etc.), generates a message to managers.

For instance, a computing device can capture any alarms that occur throughout asphalt manufacturing system 200. The computing device can log the alarms and determine any deviations from statistical norms (e.g., time of day, mean number of alarms, etc.). The computing device can create a log that includes information about the alarms. The log can be transmitted to an external device such a server or a display.

The computing device can also capture information related to hot stops. For instance, for a given time period (e.g., day, week, or month), the computing system can capture the values of the cumulative hot stop timer, or the alarm count. The computing device can compare these values to expected values and report any discrepancies to the external device.

In an aspect, disclosed solutions provide intelligent motor control systems that can automatically log parameters related to the operation of motors and determine any deviations from expected values. In some cases, a manufacturing plant can cease to operate efficiently and determining the cause can be difficult. This type of data capture enables prescriptive maintenance. For example, when an increased current draw on a motor may indicate a bearing failure or something similar. Accordingly, monitoring various parameters across the plant can be helpful.

Parameters can include a current draw. For instance, a motor draws a current from a power supply (single or multi-phase). As the motor wears over time, or as a load changes, the current value may deviate beyond a tolerance, which can be a cause for concern. As such, disclosed solutions can measure the current flowing to the motor over time, the current's minimum and maximum values, and/or average values over a specific time period.

For example, current values for certain drives may be obtained. These current values may be compared to historical values. The system may compare against two ranges, an alarm range (e.g., extreme ends indicating something is seriously wrong) and an efficiency range. When the value deviates from the efficiency range, it may be logged. Additionally, disclosed systems can generate a profile of expected values and observe how current deviates over time.

In a more specific example, a current measuring device is configured to obtain a digital current measurement of current flowing to the machine. The current measuring device provides the digital measurements to a computing device. The computing device obtains the digital current measurement from the current measurement device and stores the measurement. The computing device can access a historical current measurement (or a profile) corresponding to the machine. The computing device compares the digital current measurement with the historical current measurement. Based on the comparison, the computing device identifies a maintenance activity to be performed on the machine. Examples of maintenance include checking drive belts, bearings, and providing lubrication.

Certain aspects relate to improved safety systems by providing a plant operator an option to authorize that an AC unloading pump may be operated at the Tank Farm only when certain conditions have been met.

Traditionally, a vendor brings in a load of liquid AC on a tanker and establishes radiocommunication with the operator. The operator identifies which AC tank should be filled with the liquid AC and instructs the driver to manipulate valves accordingly. Some available control-system solutions can detect valve positions and relay that information to the operator. The operator then gives a verbal authorization to the vendor to start the unloading pump (which transfers liquid AC from the vendor's tank-car to a liquid AC tank in the plant's tank-farm).

In contrast to existing solutions, certain aspects use a control system to determine if valve positions and other conditions are correctly satisfied before a transfer of liquid AC can begin. In an example, the conditions include a correct positions of all AC flow-line valves (including but not limited to fill-line, supply-line, and return line), a current AC tank level and/or a temperature.

If the conditions are satisfied, the control system prompts the operator to acknowledge that all conditions have been met and to authorize the transfer. Only then will the control-system allow electrical power to flow through the motor driving the transfer pump. The operator may choose to start the pump from the control-house and remotely disable the pump-start switch at the tank-farm if needed.

Figure 12 illustrates an example of a computing system 1200 that can be used in a controller system, according to certain aspects. Any suitable computing system may be used for performing the operations described herein. The depicted example of a computing system 1200 includes a processor 1202 communicatively coupled to one or more memory devices 1204. The processor 1202 executes computer-executable program code 1230 stored in a memory device 1204, accesses data 1220 stored in the memory device 1204, or both. Examples of the processor 1202 include a microprocessor, an application-specific integrated circuit ("ASIC"), a field-programmable gate array ("FPGA"), or any other suitable processing device. The processor 1202 can include any number of processing devices or cores, including a single processing device. The functionality of the computing system may be implemented in hardware, software, firmware, or a combination thereof. The computing system 1200 executes program code 1230 that configures the processor 1202 to perform one or more of the operations described herein.

The memory device 1204 includes any suitable non-transitory computer-readable medium for storing data, program code, or both. A computer-readable medium can include any electronic, optical, magnetic, or other storage device capable of providing a processor with computer-readable instructions or other program code. Non-limiting examples of a computer-readable medium include a flash memory, a ROM, a RAM, an ASIC, or any other medium from which a processing device can read instructions. The instructions may include processor-specific instructions generated by a compiler or an interpreter from code written in any suitable computer-programming language, including, for example, C, C++, C#, Visual Basic, Java, or scripting language.

The computing system 1200 may also include a number of external or internal devices, such as input or output devices. For example, the computing system 1200 is shown with one or more input/output ("I/O") interfaces 1208. An I/O interface 1208 can receive input from input devices or provide output to output devices. One or more busses 1206 are also included in the computing system 1200. The bus 1206 communicatively couples one or more components of a respective one of the computing system 1200.

The computing system 1200 may also include a diagnostic port 1207. Diagnostic port 1207 may be used, for example, by an equipment vendor or an engineer, to determine whether the computing system is operating correctly, or to diagnose and remedy issues, or perform a firmware upgrade of computing system 1200.

The computing system 1200 also includes a network interface device 1210. The network interface device 1210 includes any device or group of devices suitable for establishing a wired or wireless data connection to one or more data networks. The network interface device 1210 may be a wireless device and have an antenna 1214. The computing system 1200 can communicate with one or more other computing devices implementing the computing system or other functionality via a data network using the network interface device 1210. The computing system 1200 can also include a display device 1212. Display device 1212 can be a LCD, LED, touch-screen or other device operable to display information about the computing system 1200. For example, information could include an operational status of the computing system, network status, etc.

In the following, further illustrations are described to facilitate the understanding of the present disclosure.

As used below, any reference to a series of examples is to be understood as a reference to each of those examples disjunctively (e.g., "Illustrations 1-4" is to be understood as "Illustrations 1, 2, 3, or 4").

Illustration 1 is a system according to the invention for controlling one or more machines in an asphalt plant, the system including: a motor configured to receive parameters; and a processor configured to perform operations corresponding to a remote mode, an alarm mode, and a local mode, and configured to receive one or more of a remote signal, an alarm signal, or a local signal, the processor configured to perform operations including: responsive to receiving the remote signal, transitioning to the remote mode; when in the remote mode: receiving a first set of motor parameters from a data connection over a first protocol; transmitting the first set of motor parameters to the motor; and upon receiving the alarm signal, transitioning to the alarm mode; when in the alarm mode: responsive to detecting the alarm signal for a first threshold amount of time, causing an alarm to sound; and responsive to detecting the alarm signal for a second threshold amount of time that is greater than the first threshold amount of time followed by detecting the local signal, transitioning to the local mode; and when in the local mode: receiving a second set of motor parameters from a local control interface via a second protocol that is different from the first protocol; and transmitting the second set of motor parameters to the motor.

Illustration 2 is the system of any previous or subsequent illustration, further including: a three-way switch configured to output: the remote signal when in a remote position; the local signal when in a local position; and the alarm signal when in an alarm position.

Illustration 3 is the system of any previous or subsequent illustration, wherein the processor is further configured to perform additional operations including: when in the alarm mode, in response to detecting the alarm signal for less than the second threshold amount of time, transitioning back to the remote mode.

Illustration 4 is the system of any previous or subsequent illustration, wherein the processor is further configured to perform additional operations including: when in local mode, sending a message to a control center indicating the local mode is active.

Illustration 5 is the system of any previous or subsequent illustration, wherein the first set of motor parameters are Variable Frequency Drive (VFD) parameters.

Illustration 6 is the system of any previous or subsequent illustration, wherein the processor is further configured to perform additional operations including: when in local mode transmitting, to the motor, a startup signal that when received, causes the motor to start operation using the second set of motor parameters.

Illustration 7 is the system of any previous or subsequent illustration, wherein when in remote mode, the processor is further configured to perform additional operations including disabling one or more controls from controlling the motor.

Illustration 8 is the system of any previous or subsequent illustration, further including: a bag house including: one or more fans configured to receive a fan enable signal that causes the fans to operate; and an auger configured remove fines from the bag house and to output an auger status signal indicating whether the auger is operational; an alarm configured to receive an alarm input signal that causes the alarm to sound, wherein the processor is further configured to perform additional operations including: responsive to receiving an auger status signal indicating that an auger of the bag house is off, starting a first timer; upon an expiration of the first timer, causing an auger alarm to sound by providing the alarm input signal to the alarm; responsive to receiving a snooze signal, (i) causing the auger alarm to be disabled by removing the alarm input signal from the alarm and (ii) starting a second timer; and upon an expiration of the second timer, removing a fan enable signal to disable one or more fans of the bag house.

Illustration 9 is the system of any previous or subsequent illustration, wherein the processor is further configured to perform additional operations including: before expiration of the second timer, receiving the auger status signal indicating that the auger is enabled; and responsive to receiving the auger status signal, maintaining the fan enable signal when the second timer expires.

Illustration 10 is the system of any previous or subsequent illustration, wherein the auger is configured to receive an auger input signal to cause the auger to operate, and wherein the processor is further configured to perform additional operations including responsive to receiving an acknowledgement signal, sending the auger input signal to enable the auger.

Illustration 11 is the system of any previous or subsequent illustration, wherein one or more of a first timer duration or a second timer duration are configurable via a control station.

Illustration 12 is the system of any previous or subsequent illustration, further including: a baghouse including: a first air bag rotor configured to receive a first input signal; a second air bag rotor configured to receive a second input signal and to output an operational status signal; a third air bag rotor configured to receive a third input signal.

wherein the one or more fans include a first fan, a second fan, and a third fan, wherein the processor is further configured to perform additional operations including: causing the first air bag rotor, the second air bag rotor, and the third air bag rotor to each rotate for a predetermined amount of time in a sequence by controlling the first input signal, the second input signal, and the third input signal; responsive to receiving an operational bypass signal from a control device, adjusting the sequence to an adjusted sequence that includes the first air bag rotor followed by the third air bag rotor; and causing the first air bag rotor and the third air bag rotor to each rotate for the predetermined amount of time according to the adjusted sequence by pulsing the first input signal followed by the third input signal.

Illustration 13 is the system of any previous or subsequent illustration, wherein the sequence includes: the first air bag rotor, followed by the second air bag rotor, followed by the third air bag rotor, wherein controlling the first input signal includes pulsing the first input signal, followed by the second input signal, followed by the third input signal.

Illustration 14 is the system of any previous or subsequent illustration, wherein the processor is further configured to perform additional operations including: receiving, from the control device, an additional operational bypass signal for the first air bag rotor; ignoring the additional operational bypass signal based on the operational bypass signal; and causing the first air bag rotor and the third air bag rotor to each rotate for the predetermined amount of time according to the adjusted sequence by pulsing the first input signal followed by the third input signal.

Illustration 15 is the system of any previous or subsequent illustration, further including: a bag house including: an air intake configured to receive fresh air, the air intake including: a first air pressure sensor configured to output a first air pressure measurement; an air output configured to output air, the air output including: a second air pressure sensor configured to output a second air pressure measurement; and a third air pressure sensor located in proximity to a heating element and configured to output a third air pressure measurement, wherein one or more of the first fan, the second fan, or the third fan create a differential pressure between the air intake and the air output, wherein the processor is further configured to perform additional operations including: obtaining, from the first air pressure sensor, the first air pressure measurement; obtaining, from the second air pressure sensor, the second air pressure measurement; calculating the differential pressure by subtracting the second air pressure measurement from the first air pressure measurement; determining whether the first air pressure measurement is outside a first tolerance; determining whether the second air pressure measurement is outside a second tolerance; and responsive to the determining, sending an alert to a control center.

Illustration 16 is the system of any previous or subsequent illustration, further including: a mixer configured to receive aggregate from a feeder and to mix the aggregate with binder into an aggregate mixture, wherein the feeder is configured to provide the aggregate at a specified flow rate, wherein the flow rate is adjustable; a heating element configured to: receive a heating control signal; and output heat to the mixer at a heat intensity level, wherein the heat intensity level is proportional to the heating control signal; a plurality of sensors, wherein each sensor of the plurality of sensors is configured to obtain a measurement from one or more of aggregate weight, moisture, or aggregate feed rate, wherein the processor is further configured to perform additional operations including: receiving, from the plurality of sensors, a plurality of sensor outputs indicating measured parameters; applying to the plurality of sensor outputs, a plurality of predetermined moisture measurements, each moisture measurement corresponding to an ingredient of the mixture, and the heating control signal, one or more rules; determining, from the applied rules, a desired heating intensity; and providing a heating control signal to the heating element, wherein the heating control signal corresponds to the desired heating intensity.

Illustration 17 is the system of any previous or subsequent illustration, wherein the processor is further configured to perform additional operations including: determining a flow rate and causing the feeder to provide the aggregate to the mixer at the flow rate.

Illustration 18 is the system of any previous or subsequent illustration, wherein the processor is further configured to perform additional operations including: receiving an updated plurality of moisture measurements from an updated aggregate; applying the one or more rules to the updated moisture measurements; determining, from the applied rules, an updated heating intensity; and providing an updated heating control signal heating element, wherein the updated heating control signal corresponds to the updated heating intensity.

Illustration 19 is the system of any previous or subsequent illustration, further including: a machine configured to receive a control signal that controls an operation of the machine and to output a machine status signal indicating an operational status of the machine; a remote control unit including: an additional alarm configured to receive an alarm input signal that causes the additional alarm to sound; and a snooze button configured to output a snooze signal when depressed, wherein the processor is further configured to perform additional operations including: receiving, from the machine, the machine status signal; responsive to receiving the machine status signal: providing the control signal to the machine, thereby causing the machine to stop; providing the alarm input signal to the remote control unit, thereby causing the additional alarm to sound; starting a current timer; incrementing an alarm count; and starting a cumulative timer; receiving, from the machine, an updated machine status signal; and responsive to receiving the updated machine status signal: stopping the current timer; stopping the cumulative timer; providing an updated additional alarm signal to the remote control unit, thereby causing the additional alarm to stop; and providing an updated control signal to the machine, thereby causing the machine to operate.

Illustration 20 is the system of any previous or subsequent illustration, wherein the processor is further configured to perform additional operations including: creating a log including one or more of the current timer, the cumulative timer, or the alarm count; and providing the log to an external device.

Illustration 21 is the system of any previous or subsequent illustration, wherein the processor is further configured to perform additional operations including: receiving, from the remote control unit, the snooze signal; and disabling the alarm input signal, thereby causing the alarm to stop.

Illustration 22 is the system of any previous or subsequent illustration, wherein the processor is further configured to perform additional operations including: receiving, from the machine, an additional machine status signal; responsive to receiving the additional machine status signal: providing the control signal to the machine, thereby causing the machine to stop; resetting and restart the current timer; incrementing the alarm count; and starting the cumulative timer.

Illustration 23 is the system of any previous or subsequent illustration, further including: a machine configured to receive a control signal that controls an operation of the machine and to output a machine status signal indicating an operational status of the machine; and a current measuring device configured to obtain a digital current measurement of current flowing to the machine, wherein the processor is further configured to perform additional operations including: obtaining the digital current measurement from the current measurement device; accessing a historical current measurement corresponding to the machine; comparing the digital current measurement with the historical current measurement; and responsive to the comparison, identifying a maintenance activity to be performed on the machine.

Illustration 24 is a method according to the invention for controlling an electrical motor, the method including responsive to receiving a first signal indicating that a three-way switch is in a remote position, transitioning to a remote mode; when in the remote mode: receiving a first set of motor parameters from a data connection over a first protocol; transmitting the first set of motor parameters to the electrical motor; and upon receiving a third signal indicating that the three-way switch is in an alarm position, transitioning to an alarm mode; when in the alarm mode: responsive to detecting a third signal for a first threshold amount of time, causing an alarm to sound; and responsive to detecting the third signal for a second threshold amount of time that is greater than the first threshold amount of time followed by detecting a second signal indicating that the three-way switch is in a local position, transitioning to a local mode; and when in the local mode: receiving a second set of motor parameters from a local control interface via a second protocol that is different from the first protocol; and transmitting the second set of motor parameters to the electrical motor.

Illustration 25 is the method of any previous or subsequent illustration, further including: when in the alarm mode, in response to detecting the third signal for less than the second threshold amount of time, transitioning back to the remote mode.

Illustration 26 is the method of any previous or subsequent illustration, further including: when in local mode, sending a message to a control center indicating the local mode is active.

Illustration 27 is the method of any previous or subsequent illustration, wherein the first set of motor parameters are Variable Frequency Drive (VFD) parameters.

Illustration 28 is the method of any previous or subsequent illustration, further including when in local mode, transmitting, to the motor, a startup signal that when received, causes the motor to start operation using the second set of motor parameters.

Illustration 29 is the method of any previous or subsequent illustration, wherein the startup signal is caused by depressing a startup button.

Illustration 30 is a non-transitory computer-readable storage medium according to the invention, the medium storing computer-executable program instructions, wherein when executed by a processing device, the computer-executable program instructions cause the processing device to perform operations including: responsive to receiving a first signal indicating that a three-way switch is in a remote position, transitioning to a remote mode; when in the remote mode: receiving a first set of motor parameters from a data connection over a first protocol; transmitting the first set of motor parameters to a motor; and upon receiving a third signal indicating that the three-way switch is in an alarm position, transitioning to an alarm mode; when in the alarm mode: responsive to detecting a third signal for a first threshold amount of time, causing an alarm to sound; and responsive to detecting the third signal for a second threshold amount of time that is greater than the first threshold amount of time followed by detecting a second signal indicating that the three-way switch is in a local position, transitioning to a local mode; and when in the local mode: receiving a second set of motor parameters from a local control interface via a second protocol that is different from the first protocol; and transmitting the second set of motor parameters to the motor.

Illustration 31 is a system for controlling an electrical motor, the system including: a three-way switch configured to output: a first signal when in a remote position; a second signal when in a local position; and a third signal when in an alarm position; a button configured to output a signal when depressed; a processor connected to the three-way switch and the button and configured to operate in one or more of a remote mode, an alarm mode, and a local mode, wherein the processor is configured to perform operations including: responsive to receiving the first signal, transitioning to the remote mode; when in the remote mode: receive a first set of motor parameters from a data connection over a first protocol; transmit the first set of motor parameters to a motor; and upon receiving the third signal, transitioning to the alarm mode; when in the alarm mode: responsive to detecting the third signal for a first threshold amount of time, causing an alarm to sound; and responsive to detecting the third signal for a second threshold amount of time that is greater than the first threshold amount of time followed by detecting the second signal, transitioning to the local mode; and when in the local mode: receive a second set of motor parameters from a local control interface via a second protocol that is different from the first protocol; and transmit the second set of motor parameters to the motor.

Illustration 32 is the system of any previous or subsequent illustration, wherein the processor is further configured, when in the alarm mode, in response to detecting the third signal for less than the second threshold amount of time, to transition back to the remote mode.

Illustration 33 is the system of any previous or subsequent illustration, wherein the processor is further configured, when in local mode, to send a message to a control center indicating the local mode is active.

Illustration 34 is the system of any previous or subsequent illustration, wherein the first set of motor parameters are Variable Frequency Drive (VFD) parameters.

Illustration 35 is the system of any previous or subsequent illustration, wherein when in local mode, the processor is further configured to transmit, to the motor, a startup signal that when received, causes the motor to start operation using the second set of motor parameters.

Illustration 36 is the system of any previous or subsequent illustration, wherein the startup signal is caused by depressing a startup button.

Illustration 37 is an asphalt bag house system including: a bag house including: one or more fans configured to receive a fan enable signal that causes the fans to operate; and an auger configured remove fines from the bag house and to output a status signal indicating whether the auger is operational; an alarm configured to receive an alarm input signal that causes the alarm to sound; and a processor configured to: receive the status signal indicating that an auger is off; responsive to receiving the status signal, start a first timer; upon an expiration of the first timer, cause the alarm to sound by providing the alarm input signal to the alarm; receive a snooze signal from a control station; responsive to receiving the snooze signal, (i) causing the alarm to be disabled by removing the alarm input signal from the alarm and (ii) starting a second timer; and upon an expiration of the second timer, removing the fan enable signal to disable the fans.

Illustration 38 is the asphalt bag house system of any previous or subsequent illustration, wherein the processor is further configured to perform operations including: before expiration of the second timer, receiving the status signal indicating that the auger is enabled; and responsive to receiving the status signal, maintaining the fan enable signal when the second timer expires.

Illustration 39 is the asphalt bag house system of any previous or subsequent illustration, wherein the processor is further configured to perform operations including: responsive to receiving an acknowledgement signal, sending an input signal to enable the auger.

Illustration 40 is the asphalt bag house system of any previous or subsequent illustration, wherein one or more of a first timer duration or a second timer duration are configurable via the control station.

Illustration 41 is a system including: a first air bag rotor configured to receive a first input signal; a second air bag rotor configured to receive a second input signal and to output an operational status signal; a third air bag rotor configured to receive a third input signal; and a processor configured to: cause the first air bag rotor, the second air bag rotor, and the third air bag rotor to each rotate for a predetermined amount of time in a sequence including the first air bag rotor, followed by the second air bag rotor, followed by the third air bag rotor by pulsing the first input signal, followed by the second input signal, followed by the third input signal; receive, from a control device, an operational bypass signal for the second air bag rotor; responsive to receiving the operational bypass signal, adjusting the sequence to include the first air bag rotor followed by the third air bag rotor; and cause the first air bag rotor and the third air bag rotor to each rotate for the predetermined amount of time according to the adjusted sequence by pulsing the first input signal followed by the third input signal.

Illustration 42 is the system of any previous or subsequent illustration, wherein the processor is further configured to: receive, from the control device, an additional operational bypass signal for the first air bag rotor; ignore the additional operational bypass signal based on the operational bypass signal; and cause the first air bag rotor and the third air bag rotor to each rotate for the predetermined amount of time according to the adjusted sequence by pulsing the first input signal followed by the third input signal.

Illustration 43 is the system of any previous or subsequent illustration, further including: an air intake configured to receive fresh air, the air intake including: a first air pressure sensor configured to output a first air pressure measurement; an air output configured to output air, the air output including: a second air pressure sensor configured to output a second air pressure measurement; a third air pressure sensor located in proximity to a heating element and configured to output a third air pressure measurement, wherein one or more of the first air bag rotor, second air bag rotor, and third air bag rotor create a differential pressure between the air intake and the air output; and a processor configured to perform operations including: obtain, from the first air pressure sensor, the first air pressure measurement; obtain, from the second air pressure sensor, the second air pressure measurement; calculate the differential pressure by subtracting the second air pressure measurement from the first air pressure measurement; determining whether the first air pressure measurement is outside a first tolerance; determining whether the second air pressure measurement is outside a second tolerance; and responsive to the determining, sending an alert to a control center.

Illustration 44 is an asphalt mixing system including: a mixer configured to receive aggregate from a feeder and to mix the aggregate with binder into an aggregate mixture, wherein the feeder is configured to provide the aggregate at a specified flow rate, wherein the flow rate is adjustable; a heating element configured to: receive a heating control signal; and output heat to the mixer at a heat intensity level, wherein the heat intensity level is proportional to the heating control signal; a plurality of sensors, wherein each sensor of the plurality of sensors is configured to obtain a measurement from one or more of aggregate weight, moisture, and aggregate feed rate; a processor configured to: access a plurality of predetermined moisture measurements, wherein each moisture measurement corresponds to an ingredient of the mixture; receive, from the plurality of sensors, a plurality of sensor outputs indicating measured parameters; apply one or more rules to the plurality of sensor outputs, the plurality of predetermined moisture measurements, and the heating control signal; determine, from the applied rules, a desired heating intensity; and provide a heating control signal to the heating element, wherein the heating control signal corresponds to the desired heating intensity.

Illustration 45 is the asphalt mixing system of any previous or subsequent illustration, wherein the processor is further configured to determine a flow rate and cause the feeder to provide the aggregate to the mixer at the flow rate.

Illustration 46 is the asphalt mixing system of any previous or subsequent illustration, wherein the processor is further configured to: receive an updated plurality of moisture measurements from an updated aggregate; apply the one or more rules to the updated moisture measurements; determine, from the applied rules, an updated heating intensity; and provide an updated heating control signal heating element, wherein the updated heating control signal corresponds to the updated heating intensity.

Illustration 47 is an asphalt manufacturing system including: a machine configured to receive a control signal that controls an operation of the machine and to output a machine status signal indicating an operational status of the machine; a remote control unit including: an alarm configured to receive an alarm input signal that causes the alarm to sound; and a snooze button configured to output a snooze signal when depressed; processor configured to: receive, from the machine, the machine status signal; responsive to receiving the machine status signal: provide the control signal to the machine, thereby causing the machine to stop; provide the alarm input signal to the remote control unit, thereby causing the alarm to sound; start a current timer; increment an alarm count; and start a cumulative timer; receive, from the machine, an updated machine status signal; and responsive to receiving the updated machine status signal: stop the current timer; stop the cumulative timer; provide an updated alarm signal to the remote control unit, thereby causing the alarm to stop; provide an updated control signal to the machine, thereby causing the machine to operate.

Illustration 48 is the asphalt manufacturing system of any previous or subsequent illustration, wherein the processor is further configured to: create a log including one or more of the current timer, the cumulative timer, or the alarm count; and provide the log to an external device.

Illustration 49 is the asphalt manufacturing system of any previous or subsequent illustration, wherein the processor is further configured to: receive, from the remote control unit, the snooze signal; and disable the alarm input signal, thereby causing the alarm to stop.

Illustration 40 is the asphalt manufacturing system of any previous or subsequent illustration, wherein the processor is further configured to: receive, from the machine, an additional machine status signal; responsive to receiving the additional machine status signal: provide the control signal to the machine, thereby causing the machine to stop; reset and restart the current timer; increment the alarm count; and start the cumulative timer.

Illustration 41 is the asphalt manufacturing system of any previous or subsequent illustration, further including: a current measuring device configured to obtain a digital current measurement of current flowing to the machine, wherein the processor is further configured to: obtain the digital current measurement from the current measurement device; access a historical current measurement corresponding to the machine; compare the digital current measurement with the historical current measurement; and responsive to the comparison, identifying a maintenance activity to be performed on the machine.

While the present subject matter has been described in detail with respect to specific aspects thereof, it will be appreciated that those skilled in the art, upon attaining an understanding of the foregoing may readily produce alterations to, variations of, and equivalents to such aspects. Accordingly, it should be understood that the present disclosure has been presented for purposes of example rather than limitation, and the invention is set out in the appended set of claims.

Unless specifically stated otherwise, it is appreciated that throughout this specification discussions utilizing terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provide a result conditioned on one or more inputs. Suitable computing devices include multipurpose microprocessor-based computing systems accessing stored software that programs or configures the computing system from a general purpose computing apparatus to a specialized computing apparatus implementing one or more aspects of the present subject matter. Any suitable programming, scripting, or other type of language or combinations of languages may be used to implement the teachings contained herein in software to be used in programming or configuring a computing device.

Aspects of the methods disclosed herein may be performed in the operation of such computing devices. The order of the blocks presented in the examples above can be varied-for example, blocks can be re-ordered, combined, and/or broken into sub-blocks. Certain blocks or processes can be performed in parallel.

Conditional language used herein, such as, among others, "can," "could," "might," "may," "e.g.," and the like, unless specifically stated otherwise, or otherwise understood within the context as used, is generally intended to convey that certain examples include, while other examples do not include, certain features, elements, and/or steps. Thus, such conditional language is not generally intended to imply that features, elements and/or steps are in any way required for one or more examples or that one or more examples necessarily include logic for deciding, with or without author input or prompting, whether these features, elements and/or steps are included or are to be performed in any particular example.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain examples require at least one of X, at least one of Y, or at least one of Z to each be present.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and all three of A and B and C.

The use of the terms "a" and "an" and "the" and similar referents in the context of describing the disclosed examples (especially in the context of the following claims) are to be construed to cover both the singular and the plural, unless otherwise indicated herein or clearly contradicted by context. The terms "including," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. The use of "adapted to" or "configured to" herein is meant as open and inclusive language that does not foreclose devices adapted to or configured to perform additional tasks or steps. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein, and each separate value is incorporated into the specification as if it were individually recited herein. Additionally, the use of "based on" is meant to be open and inclusive, in that a process, step, calculation, or other action "based on" one or more recited conditions or values may, in practice, be based on additional conditions or values beyond those recited. Similarly, the use of "based at least in part on" is meant to be open and inclusive, in that a process, step, calculation, or other action "based at least in part on" one or more recited conditions or values may, in practice, be based on additional conditions or values beyond those recited. Headings, lists, and numbering included herein are for ease of explanation only and are not meant to be limiting.

The various features and processes described above may be used independently of one another, or may be combined in various ways. All possible combinations and sub-combinations are intended to fall within the scope of the present disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed examples. Similarly, the example systems and components described herein may be configured differently than described. For example, elements may be added to, removed from, or rearranged compared to the disclosed examples.

## Claims

1. A system for controlling one or more machines in an asphalt plant, the system comprising:
a motor configured to receive parameters; and
a processor (326, 1202) configured to perform operations corresponding to a remote mode, an alarm mode, and a local mode, and configured to receive one or more of a remote signal, an alarm signal, or a local signal, the processor (326, 1202) configured to perform operations comprising:
responsive to receiving (402) the remote signal, transitioning to the remote mode;
when in the remote mode:
receiving (406) a first set of motor parameters from a data connection (332) over a first protocol;
transmitting (408) the first set of motor parameters to the motor; and
upon receiving the alarm signal, transitioning (410) to the alarm mode;
when in the alarm mode:
responsive to detecting the alarm signal for a first threshold amount of time, causing (412) an alarm (360) to sound; and
responsive to detecting the alarm signal for a second threshold amount of time that is greater than the first threshold amount of time followed by detecting the local signal, transitioning (414) to the local mode; and
when in the local mode:
receiving (416) a second set of motor parameters from a local control interface (324a-h) via a second protocol that is different from the first protocol; and
transmitting (418) the second set of motor parameters to the motor.

2. The system of claim 1, further comprising:
a three-way switch (322) configured to output:
the remote signal when in a remote position;
the local signal when in a local position; and
the alarm signal when in an alarm position.

3. The system of claim 1 or claim 2, wherein the processor (326, 1202) is further configured to perform additional operations comprising: when in the alarm mode, in response to detecting the alarm signal for less than the second threshold amount of time, transitioning back to the remote mode.

4. The system of any preceding claim, wherein the processor (326, 1202) is further configured to perform additional operations comprising: when in local mode, sending a message to a control center indicating the local mode is active.

5. The system of any preceding claim, wherein the first set of motor parameters are Variable Frequency Drive, VFD, parameters.

6. The system of any preceding claim, wherein the processor (326, 1202) is further configured to perform additional operations comprising: when in local mode transmitting, to the motor, a startup signal that when received, causes the motor to start operation using the second set of motor parameters.

7. The system of any preceding claim, further comprising:
a baghouse (120, 222, 500) comprising:
one or more fans (119,123; 520,522) configured to receive a fan enable signal that causes the fans (119,123; 520,522) to operate; and
an auger (530) configured remove fines from the baghouse (120, 222, 500) and to output an auger status signal indicating whether the auger (530) is operational;
an alarm (360) configured to receive an alarm input signal that causes the alarm (360) to sound, wherein the processor (326, 1202) is further configured to perform additional operations comprising:
responsive to receiving an auger status signal indicating that an auger (530) of the baghouse (120, 222, 500) is off, starting (604) a first timer;
upon an expiration of the first timer, causing (606) an auger alarm to sound by providing the alarm input signal to the alarm;
responsive to receiving (608) a snooze signal, (i) causing (610) the auger alarm to be disabled by removing the alarm input signal from the alarm and (ii) starting a second timer; and
upon an expiration of the second timer, removing a fan enable signal to disable (612) one or more fans (119,123; 520,522) of the baghouse (222).

8. The system of any preceding claim, further comprising:
a baghouse (120, 500) comprising:
a first air bag rotor configured to receive a first input signal;
a second air bag rotor configured to receive a second input signal and to output an operational status signal;
a third air bag rotor configured to receive a third input signal.
a first fan, a second fan, and a third fan, wherein the processor (326, 1202) is further configured to perform additional operations comprising:
causing (702) the first air bag rotor, the second air bag rotor, and the third air bag rotor to each rotate for a predetermined amount of time in a sequence by controlling the first input signal, the second input signal, and the third input signal;
responsive to receiving (704) an operational bypass signal from a control device, adjusting (706) the sequence to an adjusted sequence that comprises the first air bag rotor followed by the third air bag rotor; and
causing (708) the first air bag rotor and the third air bag rotor to each rotate for the predetermined amount of time according to the adjusted sequence by pulsing the first input signal followed by the third input signal.

9. The system of claim 8, wherein the processor (326, 1202) is further configured to perform additional operations comprising:
receiving, from the control device, an additional operational bypass signal for the first air bag rotor;
ignoring the additional operational bypass signal based on the operational bypass signal; and
causing the first air bag rotor and the third air bag rotor to each rotate for the predetermined amount of time according to the adjusted sequence by pulsing the first input signal followed by the third input signal.

10. The system of any preceding claim, further comprising:
a baghouse (120, 222, 500) comprising:
an air intake (502) configured to receive fresh air, the air intake comprising:
a first air pressure sensor configured to output a first air pressure measurement;
an air output (504) configured to output air, the air output comprising:
a second air pressure sensor configured to output a second air pressure measurement; and
a third air pressure sensor located in proximity to a heating element and configured to output a third air pressure measurement, wherein one or more of a first fan, a second fan, or a third fan create a differential pressure between the air intake and the air output,
wherein the processor (326, 1202) is further configured to perform additional operations comprising:
obtaining (802), from the first air pressure sensor, the first air pressure measurement;
obtaining (804), from the second air pressure sensor, the second air pressure measurement;
calculating (806) the differential pressure by subtracting the second air pressure measurement from the first air pressure measurement;
determining (808) whether the first air pressure measurement is outside a first tolerance;
determining (810) whether the second air pressure measurement is outside a second tolerance; and
responsive to the determining, sending (812) an alert to a control center.

11. The system of any preceding claim, further comprising:
a mixer (106) configured to receive aggregate from a feeder and to mix the aggregate with binder into an aggregate mixture, wherein the feeder is configured to provide the aggregate at a specified flow rate, wherein the flow rate is adjustable;
a heating element (940a-n) configured to:
receive a heating control signal; and
output heat to the mixer at a heat intensity level, wherein the heat intensity level is proportional to the heating control signal;
a plurality of sensors (930, 932, 934), wherein each sensor of the plurality of sensors (930, 932, 934) is configured to obtain a measurement from one or more of aggregate weight, moisture, or aggregate feed rate, wherein the processor (326, 1202) is further configured to perform additional operations comprising:
receiving (1004), from the plurality of sensors (930, 932, 934), a plurality of sensor outputs indicating measured parameters;
applying (1006) to the plurality of sensor outputs, a plurality of predetermined moisture measurements, each moisture measurement corresponding to an ingredient of the mixture, and the heating control signal, one or more rules;
determining (1008), from the applied rules, a desired heating intensity; and
providing (1010) a heating control signal to the heating element (940a-n), wherein the heating control signal corresponds to the desired heating intensity.

12. The system of any preceding claim, wherein the processor (326, 1202) is further configured to perform additional operations comprising:
receiving an updated plurality of moisture measurements from an updated aggregate;
applying the one or more rules to the updated moisture measurements;
determining, from the applied rules, an updated heating intensity; and
providing an updated heating control signal to heating element (940an), wherein the updated heating control signal corresponds to the updated heating intensity.

13. The system of any preceding claim, further comprising:
a machine configured to receive a control signal that controls an operation of the machine and to output a machine status signal indicating an operational status of the machine; and
a current measuring device configured to obtain a digital current measurement of current flowing to the machine, wherein the processor (326, 1202) is further configured to perform additional operations comprising:
obtaining the digital current measurement from the current measurement device;
accessing a historical current measurement corresponding to the machine;
comparing the digital current measurement with the historical current measurement; and
responsive to the comparison, identifying a maintenance activity to be performed on the machine.

14. A method for controlling an electrical motor, the method comprising:
responsive to receiving a first signal indicating that a three-way switch (322) is in a remote position, transitioning to a remote mode;
when in the remote mode:
receiving a first set of motor parameters from a data connection over a first protocol;
transmitting the first set of motor parameters to the electrical motor; and
upon receiving a third signal indicating that the three-way switch is in an alarm position, transitioning to an alarm mode;
when in the alarm mode:
responsive to detecting a third signal for a first threshold amount of time, causing an alarm to sound; and
responsive to detecting the third signal for a second threshold amount of time that is greater than the first threshold amount of time followed by detecting a second signal indicating that the three-way switch (322) is in a local position, transitioning to a local mode; and
when in the local mode:
receiving a second set of motor parameters from a local control interface via a second protocol that is different from the first protocol; and
transmitting the second set of motor parameters to the electrical motor.

15. A non-transitory computer-readable storage medium storing computer-executable program instructions, wherein when executed by a processing device, the computer-executable program instructions cause the processing device to perform operations comprising:
responsive to receiving a first signal indicating that a three-way switch is in a remote position, transitioning to a remote mode;
when in the remote mode:
receiving a first set of motor parameters from a data connection over a first protocol;
transmitting the first set of motor parameters to a motor; and
upon receiving a third signal indicating that the three-way switch is in an alarm position, transitioning to an alarm mode;
when in the alarm mode:
responsive to detecting a third signal for a first threshold amount of time, causing an alarm to sound; and
responsive to detecting the third signal for a second threshold amount of time that is greater than the first threshold amount of time followed by detecting a second signal indicating that the three-way switch is in a local position, transitioning to a local mode; and
when in the local mode:
receiving a second set of motor parameters from a local control interface via a second protocol that is different from the first protocol; and
transmitting the second set of motor parameters to the motor.

## Patentansprüche

1. System zur Steuerung einer oder mehrerer Maschinen in einer Asphaltanlage, wobei das System umfasst:
ein Motor, der für den Empfang von Parametern konfiguriert ist; und
Prozessor (326, 1202), konfiguriert zum Ausführen von Operationen, die einem entfernten Modus, einem Alarmmodus und einem lokalen Modus entsprechen, und konfiguriert zum Empfangen eines oder mehrerer eines entfernten Signals, eines Alarmsignals oder eines lokalen Signals, der Prozessor (326, 1202), konfiguriert zum Ausführen von Operationen, umfassend:
reagiert auf den Empfang (402) des Fernbedienungssignals, wechselt in den Fernbedienungsmodus;
Im Remote-Modus:
Empfangen (406) eines ersten Satzes von Motorparametern von einer Datenverbindung (332) über ein erstes Protokoll;
Übertragen (408) des ersten Satzes von Motorparametern an den Motor; und
beim Empfang des Alarmsignals Übergang (410) in den Alarmmodus;
Im Alarmmodus:
reagiert auf das Erkennen des Alarmsignals für eine Zeitspanne des ersten Schwellenwerts, wodurch (412) ein Alarm (360) ertönt; und
Reagieren auf das Erkennen des Alarmsignals für eine zweite Schwellenwertzeitspanne, die größer ist als die erste Schwellenwertzeitspanne, gefolgt von der Erkennung des lokalen Signals, Übergang (414) in den lokalen Modus; und
Im lokalen Modus:
Empfangen (416) eines zweiten Satzes von Motorparametern von einer lokalen Steuerschnittstelle (324a-h) über ein zweites Protokoll, das sich von dem ersten Protokoll unterscheidet; und
Übertragen (418) des zweiten Satzes von Motorparametern an den Motor.

2. System nach Anspruch 1, ferner umfassend:
einen Dreiwegeschalter (322), der für die Ausgabe folgender Faktoren konfiguriert ist:
das Fernsignal, wenn Sie sich in einer entfernten Position befinden;
das lokale Signal, wenn es sich in einer lokalen Position befindet; und
das Alarmsignal, wenn man sich in einer Alarmstellung befindet.

3. System nach Anspruch 1 oder Anspruch 2, wobei der Prozessor (326, 1202) ferner konfiguriert ist, um zusätzliche Operationen durchzuführen, die Folgendes umfassen: wenn er sich im Alarmmodus befindet, als Reaktion auf das Erfassen des Alarmsignals für weniger als die zweite Schwellenwertzeitspanne, Übergang zurück in den Remote-Modus.

4. System nach einem vorhergehenden Ansprüche, wobei der Prozessor (326, 1202) ferner konfiguriert ist, um zusätzliche Operationen durchzuführen, umfassend: wenn er sich im lokalen Modus befindet, sendet eine Nachricht an ein Kontrollzentrum, die anzeigt, dass der lokale Modus aktiv ist.

5. System nach einem der vorhergehenden Ansprüche, wobei der erste Satz von Motorparametern VFD-Parameter für Frequenzumrichter sind.

6. System nach einem der vorhergehenden Ansprüche, wobei der Prozessor (326, 1202) ferner konfiguriert ist, um zusätzliche Operationen durchzuführen, die Folgendes umfassen: wenn im lokalen Modus ein Startsignal an den Motor gesendet wird, das beim Empfang den Motor veranlasst, den Betrieb unter Verwendung des zweiten Satzes von Motorparametern zu starten.

7. System eines der vorhergehenden Ansprüche, ferner umfassend:
einen Schlauchfilter (120, 222, 500) bestehend aus:
ein oder mehrere Lüfter (119,123; 520,522), die konfiguriert sind, um ein Lüfterfreigabesignal zu empfangen, das den Betrieb der Lüfter (119,123;
520,522) bewirkt; und
eine Schnecke (530), die so konfiguriert ist, dass sie Feinanteile aus dem Schlauchfilter (120, 222, 500) entfernt und ein Schneckenstatussignal ausgibt, das anzeigt, ob die Schnecke (530) betriebsbereit ist;
einen Alarm (360), der so konfiguriert ist, dass er ein Alarmeingangssignal empfängt, das den Alarm (360) ertönen lässt, wobei der Prozessor (326, 1202) ferner konfiguriert ist, um zusätzliche Operationen durchzuführen, die umfassen:
reagiert auf den Empfang eines Schneckenstatussignals, das anzeigt, dass eine Schnecke (530) des Schlauchfilters (120, 222, 500) ausgeschaltet ist und einen Erstaustimer startet (604);
nach Ablauf des ersten Timers das Ertönen eines Schneckenalarms (606) durch Bereitstellen des Alarmeingangssignals an den Alarm;
auf das Empfangen (608) eines Schlummersignals reagierend, (i) das Deaktivieren des Schneckenalarms (610) durch Entfernen des Alarmeingangssignals aus dem Alarm bewirken und (ii) einen zweiten Timer starten; und
Nach Ablauf des zweiten Timers wird durch Entfernen eines Lüfteraktivierungssignals ein oder mehrere Lüfter (119,123; 520,522) des Schlauchfilters (222) deaktiviert.

8. System eines der vorhergehenden Ansprüche, ferner umfassend:
einen Schlauchfilter (120, 500) bestehend aus:
einen ersten Airbag-Rotor, der so konfiguriert ist, dass er ein erstes Eingangssignal empfängt;
einen zweiten Airbag-Rotor, der so konfiguriert ist, dass er ein zweites Eingangssignal empfängt und ein Betriebszustandssignal ausgibt;
einen dritten Airbag-Rotor, der so konfiguriert ist, dass er ein drittes Eingangssignal empfängt.
einen ersten Lüfter, einen zweiten Lüfter und einen dritten Lüfter, wobei der Prozessor (326, 1202) weiter konfiguriert ist, um zusätzliche Operationen durchzuführen, die umfassen:
Veranlassen (702), den ersten Airbag-Rotor, den zweiten Airbag-Rotor und den dritten Airbag-Rotor jeweils für eine vorbestimmte Zeit in einer Sequenz zu drehen, indem das erste Eingangssignal, das zweite Eingangssignal und das dritte Eingangssignal gesteuert werden;
Reagieren auf das Empfangen (704) eines betriebsbereiten Bypass-Signals von einer Steuervorrichtung, Einstellen (706) der Sequenz auf eine eingestellte Sequenz, die den ersten Airbagrotor gefolgt vom dritten Airbagrotor umfasst; und
Veranlassen (708), dass sich der erste Airbag-Rotor und der dritte Airbag-Rotor jeweils für die vorbestimmte Zeit entsprechend der eingestellten Sequenz drehen, indem das erste Eingangssignal gefolgt von dem dritten Eingangssignal pulsiert.

9. System nach Anspruch 8, wobei der Prozessor (326, 1202) ferner konfiguriert ist, um zusätzliche Operationen durchzuführen, umfassend:
Empfangen eines zusätzlichen Betriebs-Bypass-Signals für den ersten Airbag-Rotor von der Steuereinrichtung;
Ignorieren des zusätzlichen Betriebsumgehungssignals basierend auf dem Betriebsumgehungssignal; und
Veranlassen, dass sich der erste Airbag-Rotor und der dritte AirbagRotor jeweils für die vorbestimmte Zeit entsprechend der eingestellten Sequenz drehen, indem das erste Eingangssignal gefolgt von dem dritten Eingangssignal pulsiert.

10. System eines der vorhergehenden Ansprüche, ferner umfassend:
einen Schlauchfilter (120, 222, 500) bestehend aus:
einen Lufteinlass (502), der für die Aufnahme von Frischluft konfiguriert ist, wobei der Lufteinlass umfasst:
ein erster Luftdrucksensor, der so konfiguriert ist, dass er eine erste Luftdruckmessung ausgibt;
einen Luftausgang (504), der für die Abgabe von Luft konfiguriert ist, wobei der Luftausgang umfasst:
einen zweiten Luftdrucksensor, der so konfiguriert ist, dass er eine zweite Luftdruckmessung ausgibt; und
ein dritter Luftdrucksensor, der sich in der Nähe eines Heizelements befindet und so konfiguriert ist, dass er eine dritte Luftdruckmessung ausgibt, wobei einer oder mehrere der ersten Lüfter, ein zweiter Lüfter oder ein dritter Lüfter einen Differenzdruck zwischen dem Lufteinlass und dem Luftauslass erzeugen,
wobei der Prozessor (326, 1202) ferner konfiguriert ist, um zusätzliche Operationen durchzuführen, die Folgendes umfassen:
Gewinnung (802) des ersten Luftdrucksensors zur ersten Luftdruckmessung;
Gewinnung (804) aus dem zweiten Luftdrucksensor der zweiten Luftdruckmessung;
Berechnen (806) des Differenzdrucks durch Subtrahieren der zweiten Luftdruckmessung von der ersten Luftdruckmessung;
Bestimmung (808), ob die erste Luftdruckmessung außerhalb einer ersten Toleranz liegt;
Feststellung (810), ob die zweite Luftdruckmessung außerhalb einer zweiten Toleranz liegt; und
Reagiert auf die Bestimmung, sendet (812) einen Alarm an ein Kontrollzentrum.

11. System eines der vorhergehenden Ansprüche, ferner umfassend:
Mischer (106), konfiguriert zum Aufnehmen von Zuschlagstoff von einem Zubringer und zum Mischen des Zuschlagstoffs mit Bindemittel zu einem Zuschlagstoffgemisch, wobei der Zubringer so konfiguriert ist, dass er das Zuschlagstoff mit einer bestimmten Durchflussrate bereitstellt, wobei die Durchflussrate einstellbar ist;
Ein Heizelement (940A-N), konfiguriert für:
ein Heizungssteuersignal zu erhalten; und
Abgabe von Wärme an den Mischer bei einem Wärmeintensitätsniveau, wobei das Wärmeintensitätsniveau proportional zum Heizungssteuersignal ist;
Mehrzahl von Sensoren (930, 932, 934), wobei jeder Sensor der Mehrzahl von Sensoren (930, 932, 934) konfiguriert ist, um eine Messung von einem oder mehreren des Gesamtgewichts, der Feuchtigkeit oder der Gesamtvorschubgeschwindigkeit zu erhalten, wobei der Prozessor (326, 1202) ferner konfiguriert ist, um zusätzliche Operationen durchzuführen, die umfassen:
Empfangen (1004) von einer Vielzahl von Sensoren (930, 932, 934) einer Vielzahl von Sensorausgängen, die gemessene Parameter anzeigen;
Anwenden von (1006) auf die Vielzahl von Sensorausgängen, eine Vielzahl von vorgegebenen Feuchtigkeitsmessungen, wobei jede Feuchtigkeitsmessung einem Bestandteil des Gemisches entspricht, und das Heizungssteuersignal eine oder mehrere Regeln;
Bestimmen (1008) einer gewünschten Heizintensität aus den angewandten Regeln; und
Bereitstellen (1010) eines Heizungssteuersignals an das Heizelement (940A-N), wobei das Heizungssteuersignal der gewünschten Heizintensität entspricht.

12. System nach einem der vorhergehenden Ansprüche, wobei der Prozessor (326, 1202) ferner konfiguriert ist, um zusätzliche Operationen durchzuführen, umfassend:
Erhalt einer aktualisierten Vielzahl von Feuchtigkeitsmessungen von einem aktualisierten Aggregat;
Anwendung einer oder mehrerer Regeln auf die aktualisierten Feuchtigkeitsmessungen;
Bestimmung einer aktualisierten Heizintensität auf der Grundlage der angewandten Vorschriften; und
Bereitstellen eines aktualisierten Heizungssteuersignals an das Heizelement (940A-N), wobei das aktualisierte Heizungssteuersignal der aktualisierten Heizintensität entspricht.

13. System eines der vorhergehenden Ansprüche, ferner umfassend:
eine Maschine, die so konfiguriert ist, dass sie ein Steuersignal empfängt, das einen Betrieb der Maschine steuert, und ein Maschinenstatussignal ausgibt, das den Betriebszustand der Maschine anzeigt; und
Strommessgerät, konfiguriert zum Abrufen einer digitalen Strommessung des zu der Maschine fließenden Stroms, wobei der Prozessor (326, 1202) ferner konfiguriert ist, um zusätzliche Vorgänge durchzuführen, die umfassen:
Abrufen der digitalen Strommessung vom Strommessgerät;
Zugriff auf eine historische Strommessung, die der Maschine entspricht;
Vergleich der digitalen Strommessung mit der historischen Strommessung; und
Reagiert auf den Vergleich und identifiziert eine Wartungsmaßnahme, die an der Maschine durchgeführt werden soll.

14. Verfahren zur Steuerung eines Elektromotors, wobei das Verfahren umfasst:
Reagieren auf den Empfang eines ersten Signals, das anzeigt, dass sich ein Dreiwegeschalter (322) in einer entfernten Position befindet und in einen entfernten Modus übergeht;
Im Remote-Modus:
Empfangen eines ersten Satzes von Motorparametern von einer Datenverbindung über ein erstes Protokoll;
Übertragung des ersten Satzes von Motorparametern an den Elektromotor; und
beim Empfang eines dritten Signals, das anzeigt, dass sich der Dreiwegeschalter in einer Alarmstellung befindet, wechselt er in einen Alarmmodus;
Im Alarmmodus:
reagiert auf das Erkennen eines dritten Signals für eine erste Schwellenwertzeit, wodurch ein Alarm ausgelöst wird; und
Reagieren auf das Erkennen des dritten Signals für eine zweite Schwellenwertzeitspanne, die größer ist als die erste Schwellenwertzeitspanne, gefolgt von der Erkennung eines zweiten Signals, das anzeigt, dass sich der Dreiwegeschalter (322) in einer lokalen Position befindet und in einen lokalen Modus übergeht; und
Im lokalen Modus:
Empfangen eines zweiten Satzes von Motorparametern von einer lokalen Steuerschnittstelle über ein zweites Protokoll, das sich vom ersten Protokoll unterscheidet; und
Übertragung des zweiten Satzes von Motorparametern an den Elektromotor.

15. Nicht flüchtiges computerlesbares Speichermedium, das computerausführbare Programmbefehle speichert, wobei die computerausführbaren Programmanweisungen beim Ausführen durch eine Verarbeitungsvorrichtung die Verarbeitungsvorrichtung veranlassen, Operationen auszuführen, die umfassen:
reagiert auf den Empfang eines ersten Signals, das anzeigt, dass sich ein Dreiwegeschalter in einer entfernten Position befindet und in einen Remote-Modus übergeht;
Im Remote-Modus:
Empfangen eines ersten Satzes von Motorparametern von einer Datenverbindung über ein erstes Protokoll;
Übertragung des ersten Satzes von Motorparametern an einen Motor; und
beim Empfang eines dritten Signals, das anzeigt, dass sich der Dreiwegeschalter in einer Alarmstellung befindet, wechselt er in einen Alarmmodus;
Im Alarmmodus:
reagiert auf das Erkennen eines dritten Signals für eine erste Schwellenwertzeit, wodurch ein Alarm ausgelöst wird; und
reagiert auf das Erkennen des dritten Signals für eine zweite Schwellenwertzeitspanne, die größer ist als die Zeitspanne des ersten Schwellenwerts, gefolgt von der Erkennung eines zweiten Signals, das anzeigt, dass sich der Dreiwegeschalter in einer lokalen Position befindet und in einen lokalen Modus übergeht; und
Im lokalen Modus:
Empfangen eines zweiten Satzes von Motorparametern von einer lokalen Steuerschnittstelle über ein zweites Protokoll, das sich vom ersten Protokoll unterscheidet; und
Übertragung des zweiten Satzes von Motorparametern an den Motor.

## Revendications

1. Système de commande d'une ou de plusieurs machines dans une centrale d'enrobage, le système comprenant :
un moteur configuré pour recevoir des paramètres ; et
Processeur (326, 1202) configuré pour effectuer des opérations correspondant à un mode à distance, à un mode d'alarme et à un mode local, et configuré pour recevoir un ou plusieurs signaux distants, un signal d'alarme ou un signal local, le processeur (326, 1202) configuré pour effectuer des opérations comprenant :
réactif à la réception (402) du signal à distance, passant en mode à distance ;
En mode à distance :
réception (406) d'un premier ensemble de paramètres de moteur à partir d'une connexion de données (332) via un premier protocole ;
transmission (408) du premier ensemble de paramètres du moteur au moteur ; et
à la réception du signal d'alarme, passage (410) au mode d'alarme ;
En mode alarme :
réactif à la détection du signal d'alarme pendant un premier seuil de temps, provoquant le déclenchement d'une alarme (412) (360) ; et
réactif à la détection du signal d'alarme pendant une deuxième durée seuil supérieure à la première durée seuil suivie de la détection du signal local, passant (414) au mode local ; et
En mode local :
réception (416) d'un second ensemble de paramètres de moteur à partir d'une interface de commande locale (324A-H) via un second protocole différent du premier protocole ; et
transmission (418) du deuxième ensemble de paramètres du moteur au moteur.

2. Système selon la revendication 1, comprenant en outre :
un commutateur à trois voies (322) configuré pour produire :
le signal à distance en position éloignée ;
le signal local lorsqu'il est en position locale ; et
le signal d'alarme en position d'alarme.

3. Système selon la revendication 1 ou la revendication 2, dans lequel le processeur (326, 1202) est en outre configuré pour effectuer des opérations supplémentaires comprenant : en mode d'alarme, en réponse à la détection du signal d'alarme pendant moins de la seconde période de temps de seuil, retour au mode à distance.

4. Système selon l'une quelconque des revendications précédentes, dans lequel le processeur (326, 1202) est en outre configuré pour effectuer des opérations supplémentaires comprenant : en mode local, l'envoi d'un message à un centre de contrôle indiquant que le mode local est actif.

5. Système selon l'une quelconque des revendications précédentes, dans lequel le premier ensemble de paramètres de moteur est constitué de paramètres VFD d'entraînement à fréquence variable.

6. Système selon l'une quelconque des revendications précédentes, dans lequel le processeur (326, 1202) est en outre configuré pour effectuer des opérations supplémentaires comprenant : lorsqu'il est en mode local, transmettant, au moteur, un signal de démarrage qui, lorsqu'il est reçu, fait démarrer le moteur en utilisant le deuxième ensemble de paramètres du moteur.

7. Système selon l'une quelconque des revendications précédentes, comprenant en outre :
un dépoussiéreur à manches (120, 222, 500) comprenant :
un ou plusieurs ventilateurs (119, 123 ; 520, 522) configurés pour recevoir un signal d'activation de ventilateur qui provoque le fonctionnement des ventilateurs (119, 123 ; 520, 522) ; et
une vis sans fin (530) configurée pour éliminer les fines du filtre à manches (120, 222, 500) et pour émettre un signal d'état de la vis sans fin indiquant si la vis sans fin (530) est opérationnelle ;
une alarme (360) configurée pour recevoir un signal d'entrée d'alarme qui provoque le déclenchement de l'alarme (360), dans laquelle le processeur (326, 1202) est en outre configuré pour effectuer des opérations supplémentaires comprenant :
réactif à la réception d'un signal d'état de la vis sans fin indiquant qu'une vis sans fin (530) du filtre à manches (120, 222, 500) est éteinte, démarrant (604) une première fois ;
à l'expiration de la première minuterie, provoquer (606) le déclenchement d'une alarme de tarière en fournissant le signal d'entrée d'alarme à l'alarme ;
réactif à la réception (608) d'un signal de répétition, (i) provoquant (610) la désactivation de l'alarme de la tarière en supprimant le signal d'entrée d'alarme de l'alarme et (ii) démarrant une seconde minuterie ; et
à l'expiration de la deuxième minuterie, le retrait d'un ventilateur active le signal pour désactiver (612) un ou plusieurs ventilateurs (119, 123 ; 520 522) du filtre à manches (222).

8. Système selon l'une quelconque des revendications précédentes, comprenant en outre :
un dépoussiéreur à manches (120, 500) comprenant :
un premier rotor d'airbag configuré pour recevoir un premier signal d'entrée ;
un deuxième rotor de coussin gonflable configuré pour recevoir un deuxième signal d'entrée et pour émettre un signal d'état de fonctionnement ;
un troisième rotor de coussin gonflable configuré pour recevoir un troisième signal d'entrée.
un premier ventilateur, un deuxième ventilateur et un troisième ventilateur, dans lesquels le processeur (326, 1202) est en outre configuré pour effectuer des opérations supplémentaires comprenant :
faire tourner (702) le premier rotor d'airbag, le deuxième rotor d'airbag et le troisième rotor d'airbag pendant une durée prédéterminée dans une séquence en contrôlant le premier signal d'entrée, le deuxième signal d'entrée et le troisième signal d'entrée ;
réactif à la réception (704) d'un signal de dérivation opérationnel d'un dispositif de commande, ajustant la séquence (706) en une séquence ajustée comprenant le premier rotor de coussin gonflable suivi du troisième rotor de coussin gonflable ; et
faisant tourner (708) le premier rotor de coussin gonflable et le troisième rotor de coussin gonflable pendant la durée prédéterminée conformément à la séquence ajustée en pulsant le premier signal d'entrée suivi du troisième signal d'entrée.

9. Système selon la revendication 8, dans lequel le processeur (326, 1202) est en outre configuré pour effectuer des opérations supplémentaires comprenant :
recevoir, du dispositif de commande, un signal de dérivation de fonctionnement supplémentaire pour le premier rotor du coussin gonflable ;
ignorer le signal de dérivation opérationnel supplémentaire basé sur le signal de dérivation opérationnelle ; et
faire tourner le premier rotor de coussin gonflable et le troisième rotor de coussin gonflable pendant la durée prédéterminée selon la séquence ajustée en pulsant le premier signal d'entrée suivi du troisième signal d'entrée.

10. Système selon l'une quelconque des revendications précédentes, comprenant en outre :
un dépoussiéreur à manches (120, 222, 500) comprenant :
une prise d'air (502) configurée pour recevoir de l'air frais, l'entrée d'air comprenant :
un premier capteur de pression atmosphérique configuré pour effectuer une première mesure de pression atmosphérique ;
un débit d'air (504) configuré pour produire de l'air, le débit d'air comprenant :
un deuxième capteur de pression atmosphérique configuré pour effectuer une deuxième mesure de pression atmosphérique ; et
un troisième capteur de pression d'air situé à proximité d'un élément chauffant et configuré pour produire une troisième mesure de pression d'air, dans lequel un ou plusieurs d'un premier ventilateur, d'un deuxième ventilateur ou d'un troisième ventilateur créent une pression différentielle entre l'entrée et la sortie d'air,
dans lequel le processeur (326, 1202) est en outre configuré pour effectuer des opérations supplémentaires comprenant :
l'obtention (802), du premier capteur de pression atmosphérique, de la première mesure de pression atmosphérique ;
l'obtention (804), du second capteur de pression atmosphérique, de la deuxième mesure de pression atmosphérique ;
calculer (806) la pression différentielle en soustrayant la deuxième mesure de pression atmosphérique de la première mesure de pression atmosphérique ;
déterminer (808) si la première mesure de pression atmosphérique se situe en dehors d'une première tolérance ;
déterminer (810) si la deuxième mesure de pression atmosphérique est en dehors d'une seconde tolérance ; et
réactif à la détermination, envoyant (812) une alerte à un centre de contrôle.

11. Système selon l'une quelconque des revendications précédentes, comprenant en outre :
un mélangeur (106) configuré pour recevoir des agrégats d'une ligne d'alimentation et pour mélanger l'agrégat avec le liant dans un mélange d'agrégats, dans lequel la ligne d'alimentation est configurée pour fournir l'agrégat à un débit spécifié, dans lequel le débit est réglable ;
Un élément chauffant (940A-N) configuré pour :
recevoir un signal de commande de chauffage ; et
transmettre de la chaleur au mélangeur à un niveau d'intensité thermique, dans lequel le niveau d'intensité thermique est proportionnel au signal de commande de chauffage ;
une pluralité de capteurs (930, 932, 934), dans laquelle chaque capteur de la pluralité de capteurs (930, 932, 934) est configuré pour obtenir une mesure à partir d'un ou plusieurs poids globaux, humidité ou vitesse d'alimentation globale, dans lequel le processeur (326, 1202) est en outre configuré pour effectuer des opérations supplémentaires comprenant:
recevoir (1004), de la pluralité de capteurs (930, 932, 934), une pluralité de sorties de capteurs indiquant les paramètres mesurés ;
en appliquant (1006) à la pluralité de sorties de capteurs, une pluralité de mesures d'humidité prédéterminées, chaque mesure d'humidité correspondant à un ingrédient du mélange, et au signal de commande de chauffage, une ou plusieurs règles ;
déterminer (1008), à partir des règles appliquées, une intensité de chauffage souhaitée ; et
fournissant (1010) un signal de commande de chauffage à l'élément chauffant (940A-N), dans lequel le signal de commande de chauffage correspond à l'intensité de chauffage souhaitée.

12. Système selon l'une quelconque des revendications précédentes, dans lequel le processeur (326, 1202) est en outre configuré pour effectuer des opérations supplémentaires comprenant :
la réception d'une pluralité actualisée de mesures d'humidité à partir d'un agrégat mis à jour ;
l'application d'une ou de plusieurs règles aux mesures d'humidité mises à jour ;
déterminer, à partir des règles appliquées, une intensité de chauffage actualisée ; et
Fournir un signal de commande de chauffage mis à jour à l'élément chauffant (940A-N), dans lequel le signal de commande de chauffage mis à jour correspond à l'intensité de chauffage mise à jour.

13. Système selon l'une quelconque des revendications précédentes, comprenant en outre :
une machine configurée pour recevoir un signal de commande qui commande un fonctionnement de la machine et pour émettre un signal d'état de la machine indiquant un état de fonctionnement de la machine ; et
Dispositif de mesure de courant configuré pour obtenir une mesure numérique du courant circulant vers la machine, dans lequel le processeur (326, 1202) est en outre configuré pour effectuer des opérations supplémentaires comprenant :
l'obtention de la mesure numérique du courant à partir de l'appareil de mesure du courant ;
l'accès à une mesure de courant historique correspondant à la machine ;
comparaison de la mesure numérique du courant avec la mesure historique du courant ; et
réactif à la comparaison, en identifiant une activité de maintenance à effectuer sur la machine.

14. Procédé de commande d'un moteur électrique, le procédé comprenant :
réactif à la réception d'un premier signal indiquant qu'un interrupteur à trois voies (322) est en position distante, passant en mode distant ;
En mode à distance :
réception d'un premier ensemble de paramètres de moteur à partir d'une connexion de données via un premier protocole ;
transmission du premier ensemble de paramètres du moteur au moteur électrique ; et
à la réception d'un troisième signal indiquant que l'interrupteur à trois voies est en position d'alarme, passant en mode d'alarme ;
En mode alarme :
réactif à la détection d'un troisième signal pendant un premier seuil de temps, provoquant le déclenchement d'une alarme ; et
réactif à la détection du troisième signal pendant une deuxième durée seuil supérieure à la première durée seuil, suivie de la détection d'un second signal indiquant que l'interrupteur à trois voies (322) est en position locale, passant à un mode local ; et
En mode local :
réception d'un deuxième ensemble de paramètres de moteur à partir d'une interface de commande locale via un second protocole différent du premier protocole ; et
transmission du deuxième ensemble de paramètres du moteur au moteur électrique.

15. Support de stockage lisible par ordinateur non transitoire stockant des instructions de programme exécutables par ordinateur, dans lequel, lorsqu'elles sont exécutées par un dispositif de traitement, les instructions de programme exécutables par ordinateur amènent le dispositif de traitement à effectuer des opérations comprenant :
réactif à la réception d'un premier signal indiquant qu'un interrupteur à trois voies est en position distante, passant en mode distant ;
En mode à distance :
réception d'un premier ensemble de paramètres de moteur à partir d'une connexion de données via un premier protocole ;
transmission du premier ensemble de paramètres du moteur à un moteur ; et
à la réception d'un troisième signal indiquant que l'interrupteur à trois voies est en position d'alarme, passant en mode d'alarme ;
En mode alarme :
réactif à la détection d'un troisième signal pendant un premier seuil de temps, provoquant le déclenchement d'une alarme ; et
réactif à la détection du troisième signal pendant une deuxième durée seuil supérieure à la première durée seuil, suivie de la détection d'un deuxième signal indiquant que l'interrupteur à trois voies est en position locale, passant à un mode local ; et
En mode local :
réception d'un deuxième ensemble de paramètres de moteur à partir d'une interface de commande locale via un second protocole différent du premier protocole ; et
transmission du deuxième ensemble de paramètres du moteur au moteur.
